# FASCICULE DE BREVET EUROPEEN

(11) **EP 4 284 178 B1**
(45) Date de publication et mention de la délivrance du brevet: **22.01.2025**
(21) Numéro de dépôt: 22701965.0
(22) Date de dépôt: 26.01.2022
(51) Int. Cl.: A22C 17/00, A23P 10/10

(54) **DISPOSITIF DE FABRICATION DE BROCHETTES D'ALIMENTS COMPRENANT UN EXTRACTEUR MOBILE DE PIQUES SYNCHRONISÉ AU MOUVEMENT DES PLATEAUX DE RÉCEPTION DES DENRÉES ALIMENTAIRES**
VORRICHTUNG ZUR HERSTELLUNG VON NAHRUNGSMITTELSPIESSEN MIT EINEM BEWEGLICHEN SPIESSEXTRAKTOR, DER MIT DER BEWEGUNG VON PLATTEN ZUR AUFNAHME VON NAHRUNGSMITTELN SYNCHRONISIERT IST
DEVICE FOR MANUFACTURING FOOD SKEWERS COMPRISING A MOBILE SPIKE EXTRACTOR SYNCHRONISED WITH THE MOVEMENT OF FOODSTUFF RECEIVING TRAYS

(30) Priorité: 26.01.2021 FR 2100712
(43) Date de publication de la demande: 06.12.2023
(73) Titulaire: System B, 53810 Change (FR)
(72) Inventeur: BEUCHER, Jérémy, 53960 BONCHAMP (FR); DUMAS, Xavier, 35410 CHATEAUGIRON (FR)
(74) Mandataire: Vidon Brevets & Stratégie
(86) Numéro de dépôt international: PCT/EP2022/051688
(87) Numéro de publication internationale: WO 2022/161977

(56) Documents cités:
- WO-A1-2019/092325
- WO-A1-2020/259850
- DE-U1- 8 915 630
- FR-A1- 3 076 185
- JP-A- S6 371 163

## Description

### 1. Domaine de l'invention

L'invention concerne un appareil de fabrication de brochettes comportant deux plateaux mobiles se positionnant l'un sur l'autre en formant des cavités alignées destinées à recevoir des denrées alimentaires. L'invention concerne plus particulièrement le fait qu'il comporte un mécanisme de transfert et de positionnement de piques dans l'axe des cavités lorsque celles-ci embrochent les denrées alimentaires.

### 2. Art antérieur

L'invention se situe dans le domaine de l'agroalimentaire. Les professionnels disposent d'appareils de mise en portion permettant à partir d'un produit fabriqué en grande quantité de produire des portions individuelles en les disposant sur des piques pour faciliter la cuisson. Plus précisément, la présente invention concerne un dispositif de fabrication de brochettes dans lesquelles des denrées alimentaires diverses et variées sont alignées et embrochées sur une pique droite.

La réalisation de brochettes consiste tout d'abord à couper des aliments compacts tels que : des morceaux de viande, des légumes entiers ou coupés, des fruits, des saucisses, des dés de fromage, etc... Ces différentes denrées peuvent être embrochées manuellement sur une pique, les uns après les autres. Les piques peuvent être de simples et minces morceaux de bois allongés et taillés en pointe à une extrémité, en bambou par exemple, ces piques étant généralement jetables. Dans certains cas, l'extrémité non pointue présente un méplat pour une meilleure préhension, ou une tête sculptée présentant un motif.

D'autres piques existent en métal. Elles ont la même forme allongée et présentent une extrémité pointue et une autre formant une boucle pour la préhension.

L'opération d'embrochage faite à la main est délicate et prend un temps considérable. En effet, il est difficile pour un opérateur de centrer la pique au milieu de morceaux d'aliments qui ne sont pas immobilisés, le risque étant de s'enfoncer la pique dans la main. D'autres part, les aliments ont des consistances, des viscosités et des formes très différentes et donc la force pour les traverser doit être adaptée en conséquence. Enfin, il existe une grande multitude de piques de formes et de diamètre différent qui augmentent la difficulté de l'opération.

Il est notamment connu de la demande de brevet FR 3 076 185, appartenant au demandeur de la présente demande, un dispositif pour la fabrication manuelle de brochettes visant à faciliter l'embrochage des denrées alimentaires sur des piques afin de constituer des brochettes. Un tel dispositif comprend une base fixe et un ensemble mobile monté coulissant sur la base fixe. L'ensemble mobile comprend des plateaux inférieur et supérieur portant au moins un moule et au moins un contre moule respectivement. Lorsque les plateaux sont positionnés l'un sur l'autre, le moule et le contre moule forment des cavités longitudinales aptes à contenir les aliments préalablement disposés sur le moule. La base fixe porte en outre un système de guidage rétractable formé de trois plaques comprenant chacune des encoches ménagées de façon à maintenir les piques de manière coaxiale aux axes des cavités. Une fois les aliments maintenus dans les cavités et les piques placées dans le système de guidage, l'embrochage des aliments sur les piques est réalisé par le coulissement de l'ensemble mobile vers le système de guidage des piques. Les piques sont ainsi correctement centrées au milieu des aliments. Un tel dispositif est avantageux mais ne donne pas entièrement satisfaction du fait qu'il requiert le positionnement manuel des piques qui peut être chronophage. En effet, après ou avant avoir déposé et positionné les denrées alimentaires dans les cavités dédiées, l'opérateur doit prendre puis positionner une à une les piques d'embrochage dans les encoches du système de guidage. L'opération de positionnement des piques intervient dans le cycle des opérations de traction et de poussée des plateaux et des opérations d'ouverture des plateaux et de retrait des brochettes fabriquées. La répétition de ces actions engendre donc une certaine fatigue musculaire pour l'opérateur qui devient moins rapide et/ou précis lors de l'exécution de l'opération de positionnement des piques.

Il existe donc un réel besoin d'une solution permettant de simplifier le fonctionnement et d'améliorer la cadence des dispositifs de fabrication de brochettes permettant de bien aligner des denrées alimentaires afin que les piques les traversent bien au centre.

À cet effet, il est également connu de la demande de brevet WO2020259850, appartenant aussi au demandeur de la présente demande, un perfectionnement du dispositif susmentionné mettant en oeuvre un dispositif d'éjection par gravité d'une pique (ou brochette) permettant un positionnement automatique de ladite pique.

### 3. Objectifs de l'invention

L'invention vise à proposer un nouvel appareil de fabrication de brochettes, comportant un moule et un contre moule permettant d'immobiliser les denrées alimentaires lors de l'embrochage et de les centrer au milieu des piques des brochettes, permettant la mise en position automatique d'une pique en position d'embrochage, minimisant ainsi les interventions de l'opérateur.

### 4. Exposé de l'invention

En vue de résoudre au moins les problèmes mentionnés précédemment, la présente invention propose un dispositif de fabrication d'au moins une brochette comprenant un bâti et un chariot monté mobile en coulissement sur le bâti entre une position avant et une position arrière, et inversement, le chariot mobile comprenant un plateau inférieur coopérant avec un plateau supérieur, formant couvercle, le plateau supérieur étant monté mobile entre une position ouverte et une position fermée (ou rabattue), les plateaux inférieurs et supérieurs présentant des renfoncements de réception de denrées alimentaires formant au moins une rangée de cavités alignées lorsque le plateau supérieur est rabattu sur le plateau inférieur et au moins un orifice de passage d'une pique débouchant dans l'axe de l'au moins une rangée de cavités alignées, l'embrochage de la pique dans les denrées alimentaires logées dans l'au moins une rangée de cavités alignées s'effectuant en déplaçant le chariot mobile de la position arrière (également appelée position reculée) vers la position avant (également appelée position avancée).

Selon l'invention, le dispositif de fabrication de brochettes comprend au moins un réservoir de piques et un extracteur mobile de piques configuré pour prélever sélectivement au moins une pique dans ledit au moins un réservoir, et pour extraire ladite au moins une pique prélevée hors du réservoir de sorte à la positionner en regard de l'au moins un orifice lorsque le chariot mobile est en position arrière, et comprend en outre des premiers moyens de synchronisation configurés pour synchroniser le déplacement de l'extracteur mobile de piques au déplacement du

chariot mobile comprenant les plateaux.

L'extracteur de piques est donc, au sens de la technique proposée, un élément mobile qui assure le retrait ou dégagement d'au moins une pique du réservoir. Pour ce faire, l'extracteur mobile de piques s'engage donc au moins partiellement, et temporairement, à l'intérieur du réservoir pour prélever une pique, puis pour l'extraire hors du réservoir.

Un dispositif de fabrication de brochettes présentant de tels moyens de synchronisation du déplacement de l'extracteur mobile de piques au déplacement du chariot mobile, permet la mise en place automatique des piques en position d'embrochage. Avec un dispositif conforme à la technique proposée, excepté pour disposer les denrées alimentaires dans les cavités et récupérer les brochettes fabriquées, l'opérateur garde avantageusement sa ou ses mains sur les poignées du chariot mobile durant tout le processus de fabrication. Ceci est avantageux par rapport à l'art antérieur dans lequel la dépose manuelle des piques est chronophage et nécessite une attention particulière de la part de l'opérateur.

Le déplacement de l'extracteur mobile de piques étant réalisé pendant le déplacement du chariot mobile (car lié à celui-ci), la mise en place des piques est par ailleurs immédiate en ce sens qu'elle n'engendre aucune interruption, ou une interruption négligeable, dans la manipulation du chariot mobile. Cela se traduit donc notamment par un accroissement des cadences de fabrication et par une amélioration du confort et des conditions de travail de l'opérateur.

Par ailleurs, la mise en place automatique des piques en position d'embrochage est réalisée par le dispositif de fabrication de brochettes lui-même. Cela permet au dispositif d'être autonome, c'est-à-dire de ne pas dépendre d'une installation extérieure dédiée à la mise en position des piques. Le dispositif est ainsi aisément transportable et, dès lorsqu'il est installé, rapidement utilisable.

Selon un mode de réalisation particulier, l'extracteur mobile de piques est monté mobile en coulissement sur le bâti entre une position basse et une position haute, et inversement, l'extraction et le positionnement des piques en regard de l'au moins un orifice s'effectuant en déplaçant l'extracteur mobile de piques de la position basse vers la position haute. En outre, les moyens de synchronisation sont configurés pour synchroniser :
- la montée de l'extracteur mobile de piques de la position basse vers la position haute avec le déplacement du chariot mobile de la position avant vers la position arrière, correspondant à un recul du chariot mobile, et
- la descente de l'extracteur mobile de piques de la position haute vers la position basse avec le déplacement du chariot mobile de la position arrière vers la position avant, correspondant à un avancement du chariot mobile.

Le mouvement aller-retour horizontal des plateaux permet de faire monter et descendre la ou les lames qui sélectionnent le ou les piques dans le réservoir de piques. En d'autres termes, les étapes consistant à pousser les plateaux à l'écart de l'opérateur et à tirer les plateaux vers l'opérateur sont synchronisées avec la montée et descente du système de sélection des piques.

Un tel agencement, particulièrement avantageux lorsque le réservoir de piques est situé en-dessous du chariot mobile, permet de minimiser l'encombrement du dispositif de fabrication de brochettes. Ainsi, le dispositif peut être aisément transporté. Il peut également être facilement entreposé et/ou installé dans des espaces de stockage et/ou de travail relativement confinés.

Selon un autre mode de réalisation particulier, les moyens de synchronisation comprennent au moins un levier de synchronisation monté pivotant sur le bâti et présentant :
- une première extrémité reliée à l'extracteur mobile de piques, et
- une deuxième extrémité, supportant un deuxième galet disposé à l'intérieur d'une piste de synchronisation ménagée sur le chariot mobile, la piste de synchronisation présentant une première extrémité, associée à la position basse de l'extracteur mobile de piques, et une deuxième extrémité, associée à la position haute de l'extracteur mobile de piques.

De tels moyens mécaniques de synchronisation permettent d'assurer une synchronisation précise et efficace du déplacement de l'extracteur mobile de piques avec le déplacement du chariot mobile. L'absence de moyens électroniques permet en outre à un dispositif comprend de tels moyens de synchronisation d'être utilisé dans un environnement de travail froid et/ou humide notamment en minimisant le risque de pannes et/ou de dysfonctionnement par exemple. De tels moyens mécaniques de synchronisation sont par ailleurs simples de conception et donc simples à entretenir.

Selon un autre mode de réalisation particulier, le levier de synchronisation présente à sa première extrémité une lumière oblongue coopérant avec un premier galet porté par l'extracteur mobile de piques de sorte à ce que le pivotement du levier de synchronisation entraîne le déplacement du premier galet et le déplacement de l'extracteur mobile de piques entre les positions haute et basse, et inversement.

Une telle structure du levier de synchronisation constitue une solution simple et efficace pour obtenir un guidage fluide, non saccadé donc, et précis de l'extracteur mobile de piques entre les positions haute et basse, et inversement. Cela diminue notamment le risque d'éjection non souhaitée des piques de l'extracteur mobile de piques lors de la montée de ce dernier.

Selon un autre mode de réalisation particulier, l'extracteur mobile de piques comprend une traverse portant le premier galet, le bâti et la traverse portant des moyens de coulissement permettant le déplacement vertical de l'extracteur mobile de piques entre les positions haute et basse, et inversement.

Selon un autre mode de réalisation particulier, la piste de synchronisation comprend des premier et deuxième chemins s'étendant entre les première et deuxième extrémités de la piste de synchronisation, le premier chemin étant configuré pour être emprunté par le deuxième galet lors du recul du chariot mobile le deuxième chemin tant configuré pour être empruntée par le deuxième galet lors de l'avancement du chariot mobile.

Une telle configuration de la piste de synchronisation permet d'éviter que la pique portée par l'extracteur mobile de piques heurte le chariot mobile tout en permettant à l'extracteur mobile de piques de maintenir en position stable la pique jusqu'à ce qu'elle commence à s'introduire dans les cavités comprenant les denrées alimentaires. On s'affranchit ainsi de la mise en oeuvre d'un système dédié de guidage et de positionnement de la pique conformément aux solutions antérieures. Cela permet notamment de simplifier la construction du dispositif.

Selon un autre mode de réalisation particulier, le dispositif de fabrication comprend au moins un volet d'obturation unidirectionnel autorisant le déplacement du deuxième galet à l'intérieur du premier chemin lors du recul du chariot mobile et empêchant le déplacement du deuxième galet à l'intérieur du premier chemin lors de l'avancement du chariot mobile pour guider le deuxième galet dans le deuxième chemin.

Selon un autre mode de réalisation particulier, l'extracteur mobile de piques comprend en outre au moins une lame d'extraction d'une pique présentant sur sa face supérieure une gorge de réception et de maintien d'une pique du réservoir.

La mise en oeuvre d'une lame, qui est intrinsèquement un élément mince, permet d'éviter que d'autres piques présentes dans le réservoir restent en équilibre sur une portion de la lame d'extraction ou sur la pique engagée sur la lame en question. Une telle lame permet en outre de limiter le nombre de piques déplacées dans le réservoir lors de la montée et de la descente des lames à travers ceux-ci. Cela se traduit donc pas une diminution du risque d'éjection des piques en dehors du réservoir.

Par ailleurs, la mise en oeuvre d'une gorge sur la partie supérieure de la lame permet de minimiser le risque que la pique extraite retombe dans le réservoir lors de la manipulation du dispositif par l'opérateur.

Selon un autre mode de réalisation particulier, la lame d'extraction d'une pique est disposée à l'intérieur d'une fente ménagée dans le fond du réservoir de piques lorsque l'extracteur mobile de piques est en position basse, la lame d'extraction présentant une portion inférieure disposée à l'intérieur de la fente lorsque l'extracteur mobile de piques est en position haute.

Une telle portion inférieure permet d'éviter, en l'absence de la lame d'extraction dans la fente, que les piques présentes dans le réservoir s'échappent de celui-ci par les fentes sous l'effet de la gravité, ou que des piques non utilisées bloquent la descente de la lame d'extraction. Une telle portion inférieure permet ainsi de minimiser le risque d'accident pour l'opérateur, en évitant qu'il chute après avoir marché sur des piques tombées au sol par exemple, et de minimiser le risque de dysfonctionnement, voire de détérioration, du dispositif de fabrication de brochettes.

Selon un autre mode de réalisation particulier, le bâti comprend au moins une butée de positionnement d'une pique contre laquelle la pique, disposée dans la gorge de réception et de maintien de la lame d'extraction en position haute de l'extracteur mobile de piques, vient en appui en début d'embrochage de la pique dans les denrées alimentaires logées dans la rangée de cavités alignées.

Une telle butée de positionnement permet, après l'initiation de l'opération d'embrochage, d'immobiliser la base de la pique afin d'empêcher qu'elle ne se désaxe, voire qu'elle ne rompt ou soit éjectée. Cela permet notamment d'éviter que l'opérateur soit dans l'obligation de repositionner ou remplacer manuellement la pique. Cela permet en outre de minimiser le risque de détérioration du dispositif de fabrication de brochettes, si par exemple un éclat d'une pique venait à se bloquer dans les moyens de synchronisation.

Selon un autre mode de réalisation particulier, le dispositif de fabrication comprend au moins une languette déformable apte à maintenir la pique dans la gorge de réception et de maintien de la lame d'extraction en position haute de l'extracteur mobile de piques.

Une telle languette déformable permet d'assurer le maintien en position de la pique afin d'éviter qu'elle soit éjectée accidentellement lors de la fin de la phase de recul du chariot mobile, et donc lorsque l'extracteur mobile de pique arrive en position haute. Il a en effet été constaté par les inventeurs que le dispositif de fabrication de brochettes était sujet aux vibrations principalement lorsque le chariot mobile et/ou l'extracteur mobile de piques entrent en contact avec les butées de fin de course. De telles vibrations peuvent également apparaître lorsque le chariot mobile et/ou l'extracteur mobile de piques sont sujets à des décélérations ou accélérations importantes. Ces décélérations ou accélérations apparaissent essentiellement lorsque le chariot mobile et/ ou l'extracteur arrivent au voisinage des butées de fin de course, pour éviter un choc contre celles-ci. La mise en oeuvre des languettes permet d'optimiser le fonctionnement du dispositif en évitant d'interrompre le processus de fabrication pour assurer un repositionnement manuel de la pique et permet à l'opérateur d'utiliser le dispositif de manière dynamique sans avoir à ajuster ou contrôler la façon de pousser ou tirer le chariot mobile.

Selon un autre mode de réalisation particulier, la languette déformable est positionnée sur ledit bâti au-dessous de la butée de positionnement, et la languette déformable prend la forme d'une boucle présentant une ouverture de passage d'une pique portée par une lame d'extraction de l'extracteur mobile de piques, la languette déformable étant recourbée vers le réservoir lorsque l'extracteur mobile de piques est en position basse et recourbée dans la direction opposée lorsque l'extracteur mobile de piques est en position haute, une pique traversant l'ouverture de passage dans la position haute de l'extracteur mobile de piques.

Un tel agencement et une telle configuration de la languette déformable permettent notamment le passage de la pique au travers de l'ouverture dédiée à cet effet. L'avantage de cette configuration est double, à savoir permettre à la pique de venir en appui contre la butée de positionnement en début d'embrochage, et donc ne pas perturber le fonctionnement du dispositif, et permettre un maintien des bords supérieur et latéraux de la pique afin d'optimiser le maintien de la pique en position d'embrochage.

Selon un autre mode de réalisation particulier, les renfoncements des plateaux inférieur et supérieur supportent respectivement au moins un moule et au moins un contre moule réalisé en un matériau souple.

Cela permet de ne pas détériorer les denrées alimentaires disposées dans les cavités. Préférentiellement, les moule(s) et contre moule(s) sont fabriqués en silicone.

### 5. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- [Fig.1A], [Fig.1B] et [Fig.1C] : les figures 1A à 1C représentent, selon des vues en perspective et dans différentes positions, un exemple de dispositif de fabrication de brochettes selon un premier mode de réalisation de la technique proposée ;
- [Fig.2] : la [Fig.2] représente, selon une vue partielle en perspective, un exemple d'extracteur mobile de piques monté sur le bâti du dispositif de fabrication de brochettes selon les figures 1A à 1C ;
- [Fig.3A], [Fig.3B], [Fig.3C] et [Fig.3D] : les figures 3A à 3D représentent, selon des vues partielles en perspective, un exemple de moyens de synchronisation d'un dispositif de fabrication de brochettes selon les figures 1A à 1C ;
- [Fig.4A] et [Fig.4B]: les figures 4A et 4B représentent, selon différentes vues en perspective focalisée, un exemple de volet d'obturation unidirectionnel monté dans une piste de synchronisation faisant partie des moyens de synchronisation des figures 3A à 3D ;
- [Fig.5A], [Fig.5B], [Fig.5C] et [Fig.5D] : les figures 5A à 5D représentent, selon différentes vues, le fonctionnement du volet d'obturation unidirectionnel des figures 4A et 4B ;
- [Fig.6] : la [Fig.6] représente, selon une vue en perspective, un exemple de réservoir de piques du dispositif de fabrication de brochettes selon les figures 1A à 1C ;
- [Fig.7A] et [Fig.7B] : les figures 7A et 7B représentent, selon des vues en coupe transversale, les interactions entre des lames d'extraction de piques portées par l'extracteur mobile de piques selon la [Fig.2] et le réservoir de piques selon la [Fig.6] ;
- [Fig.8A], [Fig.8B] et [Fig.8C] : les figures 8A à 8C représentent, selon différentes vues et dans différentes positions, des languettes déformables du dispositif de fabrication de brochettes selon les figures 1A à 1C ;
- [Fig.9] : la [Fig.9] est un organigramme des étapes principales de fonctionnement d'un dispositif de fabrication de brochettes selon les figures 1A à 1C ;
- [Fig.10A], [Fig.10B], [Fig.10C], [Fig.11A], [Fig.11B], [Fig.11C], [Fig.12A], [Fig.12B], [Fig.12C], [Fig.13A], [Fig.13B], [Fig.13C], [Fig.14A], [Fig.14B], [Fig.14C] , [Fig.15A], [Fig.15B] et [Fig.15C] : [Fig.9] : les figures 10A à 15C représentent, selon différentes vues, le dispositif de fabrication de brochettes selon les figures 1A à 1C dans différentes positions de fonctionnement.

### 6. Description d'un mode de réalisation de l'invention

Par souci de clarté, de mêmes éléments ont été désignés par de mêmes références sur les différentes figures.

Par ailleurs, on utilise dans la présente description les termes d'orientation et de positionnement "inférieur", "supérieur", "avant", "arrière", etc. en se référant arbitrairement à une position normale d'utilisation d'un dispositif de fabrication de brochettes, dans laquelle deux plateaux se positionnant l'un sur l'autre sont mobiles dans un plan approximativement parallèle au sol (horizontal) et coulissent entre une position proximale (avant) et distale (arrière) par rapport à des butées de positionnement des piques dans les plateaux. Lors de l'utilisation d'un tel dispositif, l'opérateur est situé du côté des butées de positionnement.

### 6.1 Principe général

L'invention concerne un dispositif de fabrication d'une ou de plusieurs brochettes. Un tel dispositif comprend un bâti et un chariot mobile monté mobile en coulissement sur le bâti entre une position avant et une position arrière, et inversement. Le chariot mobile comprend un plateau inférieur coopérant avec un plateau supérieur, formant couvercle. Le plateau supérieur est monté mobile entre une position ouverte et une position fermée ou rabattue. Les plateaux inférieur et supérieur présentent des renfoncements de réception de denrées alimentaires formant une rangée de cavités alignées lorsque le plateau supérieur est rabattu sur le plateau inférieur et un orifice de passage d'une pique débouchant dans l'axe de la rangée de cavités alignées. L'embrochage des piques dans les aliments logés dans les cavités alignées s'effectue en déplaçant le chariot mobile de la position arrière vers la position avant. Le dispositif comprend en outre un réservoir de piques, un extracteur mobile de piques configuré pour extraire sélectivement une ou plusieurs piques du réservoir. Pour ce faire, l'extracteur est configuré pour s'introduire au moins partiellement et temporairement dans le réservoir afin de prélever et d'extraire une ou plusieurs piques de celui-ci, et positionner la ou les piques en regard de l'orifice de passage correspondant lorsque le chariot mobile est en position arrière. Le dispositif comprend également des moyens de synchronisation configurés pour synchroniser le déplacement de l'extracteur mobile de piques au déplacement du chariot mobile.

De cette manière, le mouvement d'avant en arrière du chariot mobile permet d'extraire des piques hors du réservoir par le biais de l'extracteur mobile et de les placer en position pour l'embrochage tandis que le mouvement d'arrière en avant de ce même chariot mobile permet l'embrochage des denrées disposées entre les plateaux sur les piques.

Ce mouvement d'avant en arrière du chariot mobile, et inversement, est assuré par un opérateur à l'aide de poignées disposées sur le chariot mobile. Sans retirer ses mains des poignées, l'opérateur peut d'une part extraire automatiquement des piques du réservoir en repoussant le chariot mobile (cette étape étant assurée par l'extracteur qui traverse le réservoir et prélève au passage une ou plusieurs piques pour les extraire hors du réservoir), puis embrocher les aliments sur les piques ainsi extraites en ramenant le chariot mobile vers lui.

En d'autres termes, certaines étapes du fonctionnement du dispositif de fabrication de brochettes sont réalisées de manière simultanée, et notamment le mouvement du chariot mobile qui est synchronisé au déplacement des piques stockés dans le réservoir. L'opérateur n'est plus contraint de positionner manuellement des piques en regard des plateaux avant l'embrochage.

Cela se traduit donc par une simplification de l'utilisation du dispositif de fabrication de brochettes et une amélioration de la productivité.

### 6.2 Description d'un mode de réalisation

### 6.2.1 Dispositif de fabrication de brochettes

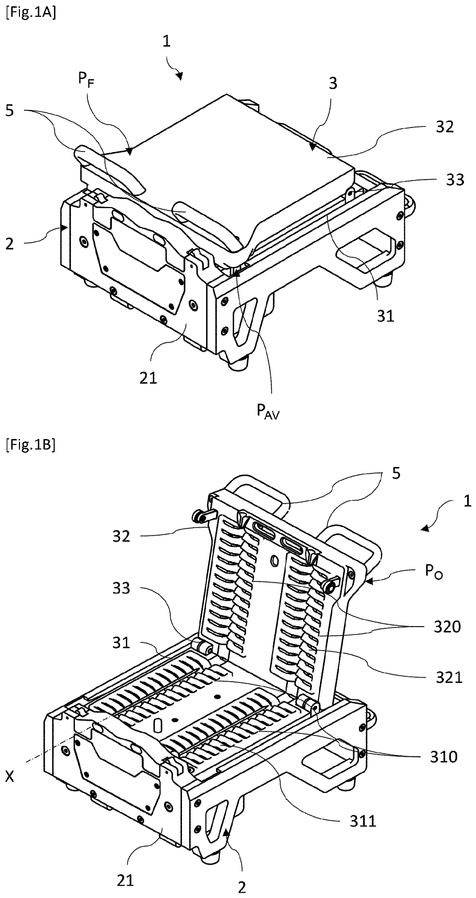

Les **figures 1A** à **1C** présentent en perspective, selon différentes vues, un exemple de dispositif de fabrication de brochettes dans lequel le déplacement d'un extracteur mobile de piques, configuré pour prélever et extraire des piques d'un réservoir du dispositif et placer les piques extraites en position d'embrochage de denrées alimentaires, est synchronisé au déplacement d'un chariot mobile portant des plateaux pivotants, conformément a la technique proposée.

Le dispositif 1 de fabrication de brochettes comprend un bâti 2 équipé de pieds destinés à poser le dispositif 1 sur une surface, horizontale de préférence. Le bâti 2 comprend en outre un espace vide rectangulaire (non référencée) destinée à recevoir d'autres éléments du dispositif comme nous le verrons plus en détails par la suite.

Le dispositif 1 comprend par ailleurs un chariot mobile 3 comprenant un premier plateau 31, dit plateau inférieur, et un deuxième plateau 32, dit plateau supérieur. Le plateau inférieur 31 est disposé dans l'espace vide rectangulaire du bâti 2. Le plateau supérieur 32, formant couvercle, est monté pivotant sur le chariot mobile 3, par l'intermédiaire d'une charnière 33, entre une position fermée P_{F} ou rabattue, représentée en [Fig. 1A], et une position ouverte PO, représentée en figures 1B notamment.

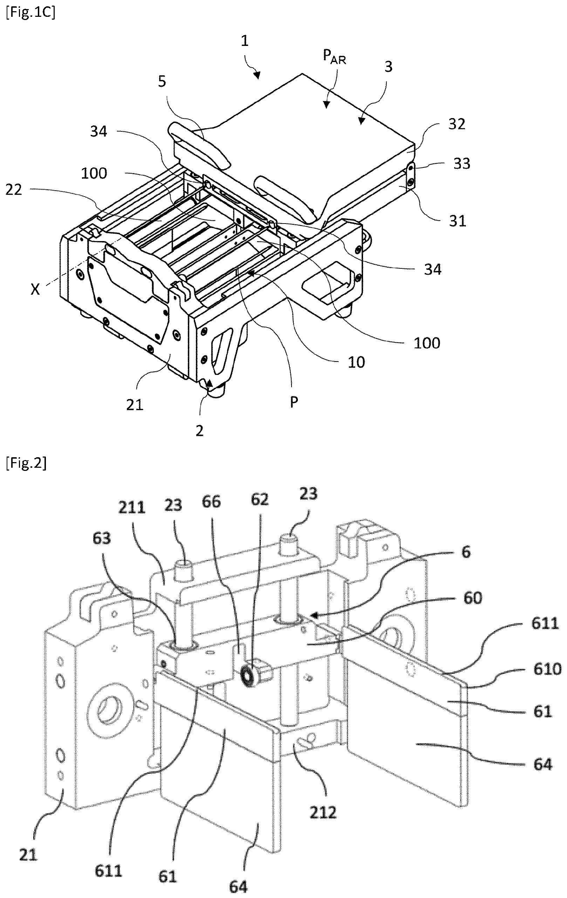

Les plateaux inférieur et supérieur 31, 32 présentent respectivement des renfoncements 310, 320 de réception de denrées alimentaires formant, lorsque le plateau supérieur 32 est rabattu sur le plateau inférieur 31, des rangées parallèles de cavités alignées. Chaque renfoncement, et donc chaque cavité formée par la superposition de deux renfoncements appartenant respectivement aux plateaux inférieur et supérieur, s'étend longitudinalement selon un axe X. L'axe X définit en outre l'axe longitudinal du dispositif 1. En outre, les plateaux inférieur et supérieur 31, 32 présentent respectivement sur un de leurs bords des encoches complémentaires formant, lorsque le plateau supérieur 32 est rabattu sur le plateau inférieur 31, des orifices 34 de passage d'une pique. Chaque orifice 34 est orienté selon l'axe longitudinal X d'une cavité et débouche à l'intérieur de celle-ci, tel qu'illustré en relation avec la [Fig.1C] notamment.

Par ailleurs, le chariot mobile 3 est monté coulissant sur le bâti 2 selon l'axe longitudinal X entre une position avant P_{AV} et une position arrière P_{AR}, et inversement.

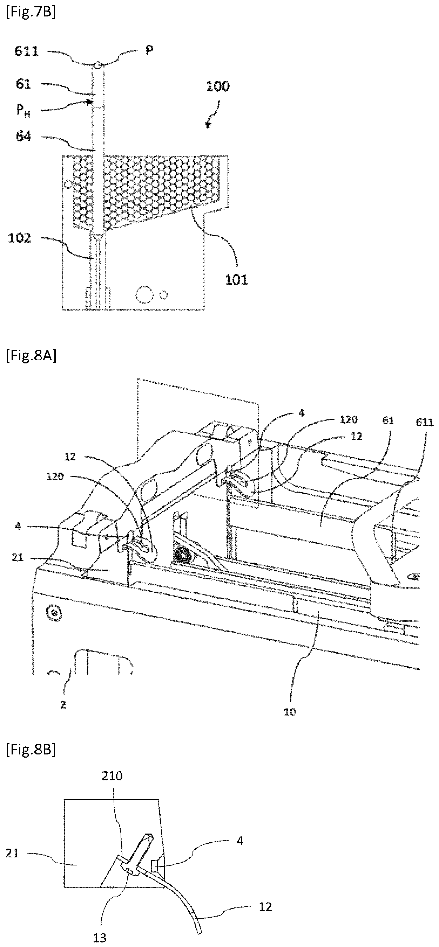

En position avant P_{AV}, telle qu'illustrée en relation avec la [Fig.1A] notamment, le chariot mobile 3 est sensiblement plaqué contre des butées de positionnement 4 des piques, du côté de l'utilisateur. Ces butées de positionnement 4 des piques, qui sont davantage visibles en [Fig.8A] notamment, sont portées par une portion avant 21 du bâti 2 du côté duquel l'utilisateur se positionne pour manoeuvrer le dispositif. Les butées de positionnement 4 sont configurées pour immobiliser la base des piques, c'est-à-dire l'extrémité de la pique opposée à la pointe, de manière à empêcher le déplacement non souhaité des piques selon l'axe longitudinal X lors de l'opération d'embrochage des denrées sur les piques. Lorsque le chariot mobile 3 est déplacé par l'opérateur à l'aide de poignées de la position arrière P_{AR} vers la position avant P_{AV}, c'est-à-dire lorsque l'opérateur tire le chariot mobile vers lui, les denrées alimentaires sont ainsi embrochées sur les piques.

En position arrière P_{AR}, telle qu'illustrée en relation avec la [Fig.1C] notamment, le chariot mobile 3 est éloigné des butées de positionnement 4 d'une distance supérieure à la longueur des piques P de manière à permettre le positionnement d'une pique extraite du réservoir en regard de chacun des orifices 34 du chariot mobile 3. L'embrochage des aliments logés dans les cavités sur les piques s'effectue donc en déplaçant le chariot mobile 3 de la position arrière P_{AR} vers la position avant P_{AV}.

Le dispositif 1 de fabrication de brochettes comprend en outre deux poignées 5 placées à l'avant du plateau supérieur 32, c'est-à-dire à l'opposé à la charnière 33. Les poignées 5 permettent d'animer le pivotement du plateau supérieur 32 ainsi que le coulissement du chariot mobile 3 par rapport au bâti 2. De manière alternative, le dispositif peut comprendre une unique poignée des lors qu'elle permet d'assurer les opérations précitées.

Par ailleurs, le dispositif 1 comprend un réservoir 10 de piques non utilisés qui s'étend selon l'axe longitudinal X du dispositif 1. Le réservoir 10 est disposé à l'intérieur de l'espace vide rectangulaire du bâti 2, au-dessous du plateau inférieur 31 du chariot mobile 3, et est fixé de manière inamovible au bâti 2.

Selon l'invention, le dispositif 1 comprend en outre un extracteur mobile de piques, configuré pour prélever et extraire sélectivement des piques du réservoir 10 dans un premier temps, puis pour positionner une pique extraite hors du réservoir en regard de chacun des orifices 34 lorsque le chariot mobile 3 est en position arrière P_{AR}. Le dispositif 1 comprend par ailleurs des moyens de synchronisation configurés pour synchroniser le déplacement de l'extracteur mobile de piques au déplacement du chariot mobile 3. L'extracteur mobile de piques et les moyens de synchronisation, non visibles sur les figures 1A, 1B et 1C, seront décrits en détail par la suite.

Dans l'exemple de réalisation illustré en relation avec les figures, le dispositif 1 comprend deux cavités alignées de réception de produits alimentaires, qui sont formées par les renfoncements 310, 320, et est ainsi capable de fabriquer deux brochettes en même temps. Ce chiffre n'est donné qu'à titre d'exemple, le dispositif selon l'invention peut aussi être adapté à la fabrication d'une seule brochette ou trois ou neuf, ou un nombre quelconque, en fonction notamment du nombre de cavités alignées de réception de produits alimentaires prévues dans le chariot mobile 3. De préférence, les renfoncements 310, 320 des plateaux inférieur et supérieur 31, 32 supportent respectivement un moule 311 et un contre moule 321 amovibles réalisés en un matériau souple, tel du silicone ou un élastomère thermoplastique, afin de ne pas détériorer les denrées alimentaires lors de l'opération d'embrochage. La dureté du matériau souple est déterminée de manière à assurer un maintien correct tout en préservant l'intégrité des denrées alimentaires.

La charnière 33 de rotation du plateau supérieur 32 est disposée à l'arrière du chariot mobile 3 de manière à simplifier la manipulation du dispositif 1.

Le chariot 3 est monté mobile en coulissement sur le bâti 2 par le biais de deux glissières 22 portées par le bâti 2. Les glissières 22 sont formées par deux tiges, s'étendant selon l'axe longitudinal X du dispositif 1, disposées à l'intérieur de l'espace vide rectangulaire du bâti 2 au-dessous du plateau inférieur 31 du chariot mobile 3. Les extrémités longitudinales de chaque tige 22 sont solidarisées de part et d'autre du bâti 2, à savoir à la portion avant 21, formant une butée avant de coulissement, et à une portion arrière (non visible), formant une butée arrière de coulissement.

Par ailleurs, de façon avantageuse, le dispositif 1 comprend des languettes déformables 12 aptes à maintenir la pique sur l'extracteur mobile de piques. De telles languettes déformables, davantage visibles en figures 8A à 8C, seront détaillées par la suite.

### 6.2.2 Extracteur mobile de pique

La [Fig.2] présente en perspective, et de manière isolée, un exemple d'extracteur mobile de piques monté de manière coulissante sur le bâti du dispositif de fabrication de brochettes.

L'extracteur mobile de piques 6 est, selon l'exemple illustré, monté mobile en coulissement sur le bâti 2 entre une position basse et une position haute, et inversement de manière à ce que l'extraction et le positionnement des piques (non représentés) en regard des orifices du chariot mobile s'effectuent en déplaçant l'extracteur mobile de piques 6 depuis la position basse vers la position haute.

Des lames d'extraction 61, portées par l'extracteur mobile de piques 6, assurent le prélèvement et l'extraction des piques stockées dans le réservoir puis le positionnement de ces piques en regard des orifices du chariot mobile. L'extracteur mobile de piques 6 présente autant de lames d'extraction 61 que de rangées de cavités présentes dans le chariot mobile. Les lames d'extraction présentent respectivement une longueur plus courte que la longueur des piques pour éviter tout contact avec le chariot mobile lors du fonctionnement du dispositif. Ces lames sont disposées de telle sorte à pouvoir traverser le réservoir de piques.

En outre, l'extracteur mobile de pique 6 porte un premier galet 62 faisant partie des moyens de synchronisation des déplacements de l'extracteur mobile de piques 6 et du chariot mobile 3 qui seront détaillés par la suite.

Tel qu'illustré, l'extracteur mobile de piques 6 comprend un corps principal, sensiblement de forme parallélépipédique rectangle, également appelé traverse 60, monté mobile en coulissement sur le bâti 2.

Pour ce faire, l'extracteur mobile de piques 6 présente deux trous traversant 63 configurés pour coopérer avec deux glissières 23 verticales portées par la portion avant 21 du bâti 2. Les glissières sont formées par deux tiges 23 verticales dont les extrémités longitudinales sont solidarisées de part et d'autre de la portion avant 21 du bâti 2, à savoir à une partie supérieure 211, formant une butée supérieure de coulissement, et à une partie inférieure 212, formant une butée inférieure de coulissement.

Par ailleurs, l'extracteur mobile de piques 6 comprend deux lames d'extraction 61 parallèles faisant perpendiculairement saillie de la traverse 60 et étant orientées selon l'axe longitudinal X du dispositif 1 en direction du chariot mobile 3.

La tranche de chaque lame d'extraction 61 est orientée verticalement et présente une l'épaisseur correspondant sensiblement au diamètre des piques de sorte à s'assurer que chaque lame d'extraction 61 saisisse une seule pique à la fois au sein du réservoir pour ensuite l'extraire hors du réservoir. En effet, une telle épaisseur permet d'éviter que d'autres piques du réservoir restent en équilibre sur une portion de la lame d'extraction ou sur la pique engagée sur la lame. Un tel agencement permet en outre de limiter le nombre de piques déplacées dans les compartiments du réservoir lors de la montée et de la descente des lames à travers ceux-ci. Cela se traduit donc pas une diminution du risque d'éjection des piques en dehors du réservoir.

Les lames d'extraction 61 présentent chacune, sur leur face supérieure 610, une gorge 611 destinée à réceptionner et maintenir une pique présente dans le réservoir 10. Une telle gorge 611 permet de minimiser le risque que la pique extraite ne retombe dans le réservoir 10 lors de la manipulation du dispositif 1 par l'opérateur.

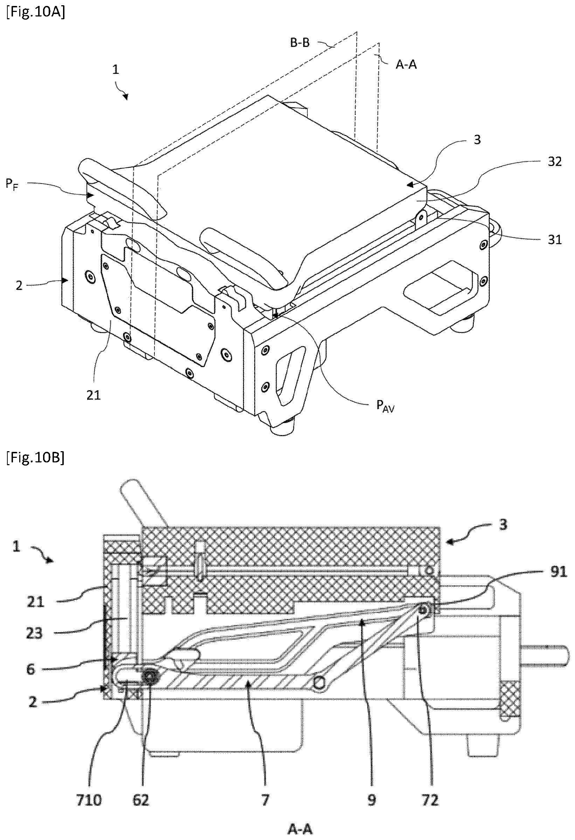

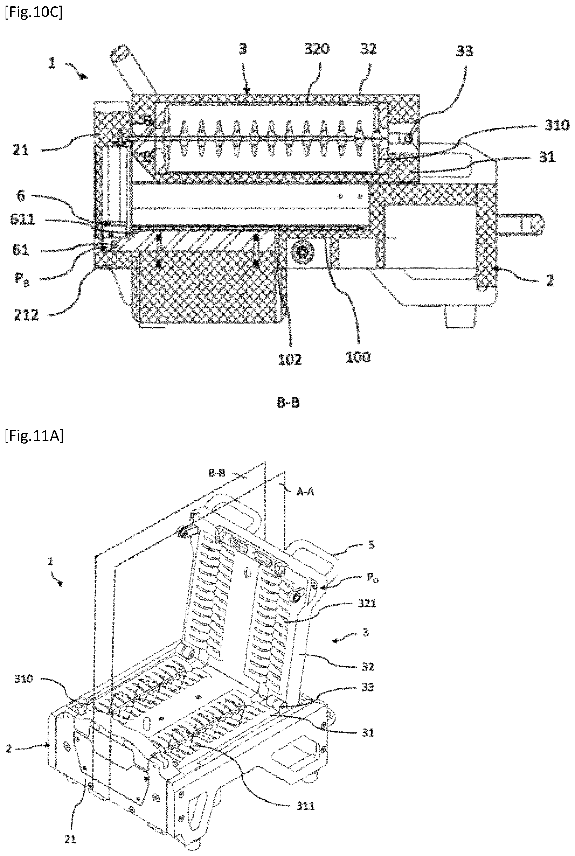

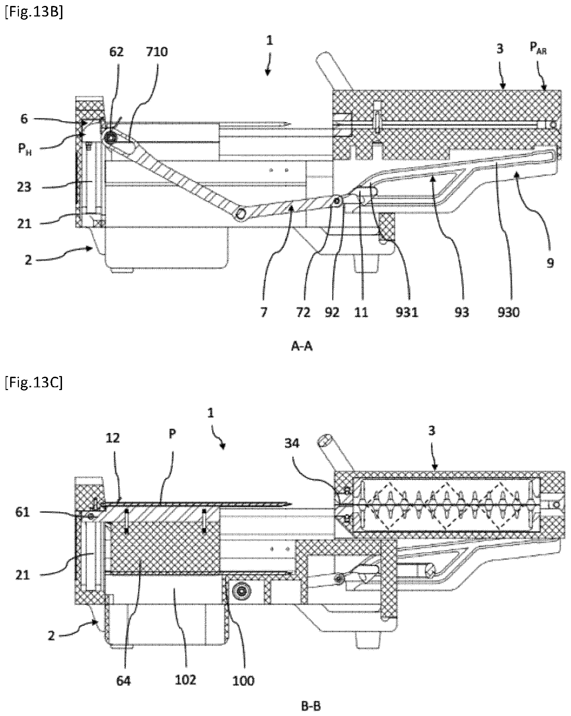

Dans l'exemple illustré, le premier galet 62 est solidaire d'un élément de support faisant perpendiculairement saillie à partir de la traverse 60 et étant orienté selon l'axe longitudinal du dispositif 1. Le premier galet 62 est agencé sensiblement au milieu de la traverse 60. Une rainure 66 est en outre ménagée dans la traverse 60, en regard du premier galet 62, de manière à permettre le passage des moyens de synchronisation, à savoir la première extrémité du levier de synchronisation comme illustré en relation avec les figures 10B et 13B notamment.

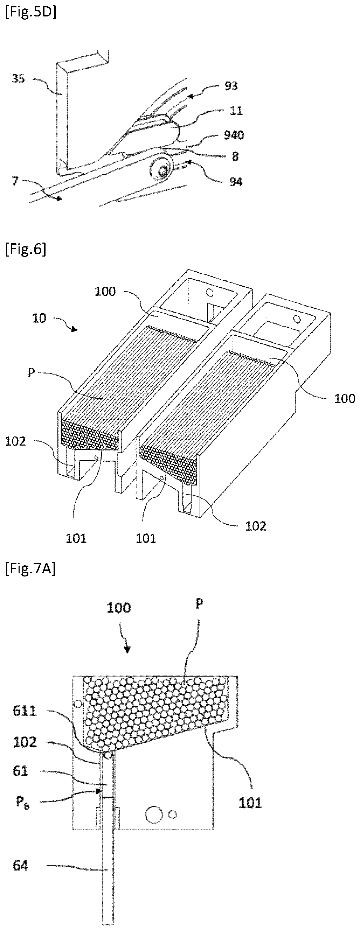

Par ailleurs, chaque lame d'extraction 61 porte une portion inférieure 64, formée par une plaque, configurée pour empêcher les piques présentes dans le réservoir de s'introduire accidentellement à l'intérieure d'une fente 102 de réception de la lame d'extraction 61, tel qu'illustré en relation avec les figures 7A et 7B notamment.

### 6.2.3 Moyens de synchronisation

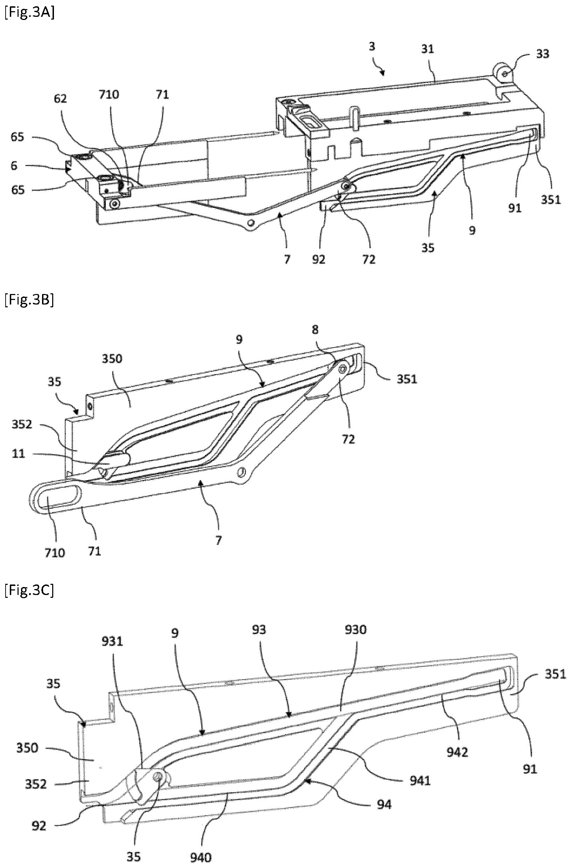

Les **figures 3A** à **3D** sont différentes vues d'un exemple de moyens de synchronisation du déplacement de l'extracteur mobile de piques avec le déplacement du chariot mobile dans un dispositif de fabrication de brochettes conforme à l'invention.

Dans le cas où le réservoir de piques non utilisées est disposé sous le chariot mobile, conformément à l'exemple illustré, les moyens de synchronisation sont configurés pour lier le coulissement vertical de l'extracteur mobile de piques au coulissement horizontal du chariot mobile.

Plus précisément, les moyens de synchronisation sont configurés pour synchroniser la montée de l'extracteur mobile de piques 6 de la position basse vers la position haute au déplacement du chariot mobile 3 de la position avant vers la position arrière, correspondant à un recul du chariot mobile 3, et la descente de l'extracteur mobile de piques 6 de la position haute vers la position basse au déplacement du chariot mobile 3 de la position arrière vers la position avant, correspondant à un avancement du chariot mobile 3.

Dans l'exemple illustré, un tel couplage des déplacements du chariot mobile 3 et de l'extracteur mobile de piques 6 est obtenu par la mise en oeuvre de moyens de synchronisation comprenant un levier de synchronisation 7, un deuxième galet 8 porté par le levier de synchronisation 7, une piste de synchronisation 9 ménagée sur le chariot mobile 3 dans laquelle le deuxième galet 8 est mobile en coulissement et un premier galet 62 de l'extracteur mobile de piques 6 coopérant avec le levier de synchronisation 7.

Tel qu'illustré, le levier de synchronisation 7 présente sensiblement une forme en « L » et est monté pivotant, en son coude, sur le bâti (non représenté).

Le levier de synchronisation 7 présente une première extrémité longitudinale 71, appelée première extrémité, et une deuxième extrémité longitudinale 72, appelée deuxième extrémité, située à l'opposé de la première extrémité 71.

La première extrémité 71 présente une lumière oblongue 710 configurée pour recevoir le premier galet 62 porté par l'extracteur mobile de piques 6. Le premier galet 62 est configurée pour être mobile à l'intérieur de la lumière oblongue 710 lors du fonctionnement du dispositif. Plus précisément, et comme décrit et illustré plus en détail par la suite, la lumière oblongue 710 permet le déplacement vertical du premier galet 62 lors du pivotement du levier de synchronisation 7.

La deuxième extrémité 72 du levier de synchronisation 7 porte le deuxième galet 8, partiellement visible en [Fig.3B], configuré pour se déplacer à l'intérieur de la piste de synchronisation 9 ménagée sur le chariot mobile 3.

Plus précisément, la piste de synchronisation 9 est ménagée sur une face latérale 350 d'une plaque 35 fixée sous le plateau inférieur 31. La plaque 35 est orientée selon l'axe longitudinal du dispositif 1 de manière à présenter une première extrémité longitudinale 351 située à l'arrière du chariot mobile 3 et une deuxième extrémité longitudinale 352 située à l'avant du chariot mobile 3.

Tel qu'illustré, la piste de synchronisation 9 présente une première extrémité 91 associée à la position basse de l'extracteur mobile de piques 6, et une deuxième extrémité 92 associée à la position haute de l'extracteur mobile de piques 6.

La première extrémité 91 de la piste de synchronisation 9 est située à la première extrémité longitudinale 351 de la plaque 35 au voisinage du plateau inférieur 31. En d'autres termes, la première extrémité 91 de la piste de synchronisation 9 est située dans la partie supérieure arrière de la plaque 35.

La deuxième extrémité 92 de la piste de synchronisation 9 est située à la deuxième extrémité longitudinale 352 de la plaque 35, à distance du plateau inférieur 31. En d'autres termes, la deuxième extrémité 92 de la piste de synchronisation 9, qui est diagonalement opposée à la première extrémité 91, est située dans la partie inférieure de deuxième extrémité longitudinale 352 de la plaque 35.

La piste de synchronisation 9 présente en outre un premier chemin 93, configuré pour être emprunté par le deuxième galet 8 lors du recul du chariot mobile 3, et un deuxième chemin 94, configuré pour être empruntée par ce même deuxième galet 8 lors de l'avancement du chariot mobile 3. Ces chemins s'étendent tous deux entre les première et deuxième extrémités 91, 92.

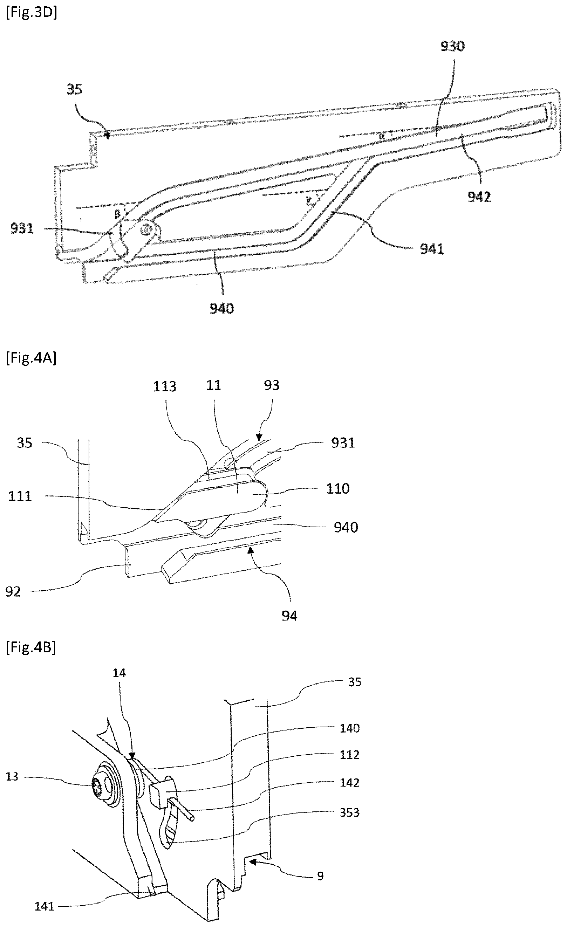

Tel qu'illustré en relation avec la [Fig.3D], le premier chemin 93 comprend un premier segment 930 partant de la première extrémité 91 et prolongé par un deuxième segment 931 débouchant dans la deuxième extrémité 92. Le deuxième galet 8 lorsqu'il circule dans ce premier chemin décrit ainsi une trajectoire descendante.

Le premier segment 930 est configuré pour initier une montée lente de l'extracteur mobile de piques tant que le chariot mobile est positionné au-dessus des lames d'extraction et des piques portées par celles-ci. Le deuxième segment 931 est configuré pour permettre la montée rapide de l'extracteur mobile de piques dès lors que le chariot mobile est suffisamment éloigné des lames d'extraction et des piques portées par celles-ci.

Pour ce faire, le premier segment 930 présente, par rapport à l'axe longitudinal du dispositif, c'est-à-dire par rapport à un axe horizontal, une première pente d'angle α et le deuxième segment 931 présente une deuxième pente d'angle β. La valeur de l'angle β est supérieure à la valeur de l'angle α.

Le deuxième chemin 94 quant à lui comprend un premier segment 940 partant de la deuxième extrémité 92 et prolongé par un deuxième segment 941, lui-même prolongé par un troisième segment 942 débouchant dans la première extrémité 91. Le deuxième galet 8 décrit ainsi une trajectoire montante lorsqu'il circule dans ce deuxième chemin.

Lorsque l'opérateur tire le chariot vers lui, le premier segment 940 est configuré pour maintenir l'extracteur mobile de piques en position haute jusqu'à ce que les piques portées par les lames d'extraction pénètrent dans les orifices de passage débouchant dans les cavités du chariot mobile. Le deuxième segment 941 est configuré pour initier une descente rapide de l'extracteur mobile de piques pour éviter que le chariot mobile percute les lames d'extraction lorsqu'il se rapproche de l'opérateur. Le troisième segment 942 est configuré pour poursuivre la descente lente de l'extracteur mobile de piques jusqu'en position basse de manière à préparer l'extraction des piques du prochain cycle de fonctionnement du dispositif.

Pour ce faire, le premier segment 940 présente, par rapport à l'axe longitudinal du dispositif, une pente d'angle nul, le deuxième segment 941 présente une pente d'angle y et le troisième segment 942 présente une pente d'angle α. En outre, le premier segment 940 du deuxième chemin 94 présente une longueur inférieure au premier segment 930 du premier chemin 93 et la valeur de l'angle y du deuxième segment 941 du deuxième chemin 94 est sensiblement supérieure à la valeur de l'angle β du deuxième segment 931 du premier chemin 93.

L'angle β est déterminé de manière à assurer une descente rapide des lames d'extraction 61 pour pallier leur immobilité lors du coulissent du galet 8 dans le premier segment 940 du deuxième chemin 94. En d'autres termes, l'angle β est déterminé pour éviter que les lames d'extraction 61 ne percutent le chariot mobile 3. De telle contraintes font que le deuxième segment 941 du deuxième chemin 94 débouche dans le premier segment 930 du premier chemin 93 et donc que le troisième segment 942 du deuxième chemin 94 est confondu avec une portion du premier segment 930 du premier chemin 93.

La fonction respective de chaque segment de la piste de synchronisation explique donc la raison pour laquelle les premier et deuxième chemins présentent des agencements et courbures différentes.

### 6.2.4 Volet d'obturation unidirectionnel

On présente en relation avec les **figures4A** à **5D** un exemple de structure de volet d'obturation unidirectionnel disposé à l'intérieur de la piste de synchronisation du dispositif de fabrication de brochettes.

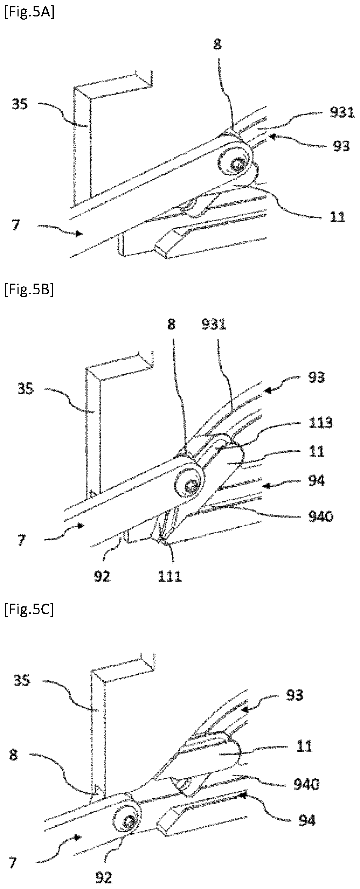

Les figures 4A et 4B présentent selon différentes vues en perspective, et de manière focalisée, la structure d'un volet d'obturation unidirectionnel. Les figures 5A à 5D illustrent le mouvement du volet d'obturation unidirectionnel lors du déplacement du deuxième galet dans la piste de synchronisation.

Le volet d'obturation unidirectionnel 11, également appelé clapet, est configuré, d'une part, pour autoriser le déplacement du deuxième galet 8 à l'intérieur du premier chemin 93 de la piste de synchronisation lors du recul du chariot mobile 3 et pour guider le deuxième galet 8 vers la deuxième extrémité de la piste de synchronisation 9. Le volet d'obturation unidirectionnel 11 est configuré, d'autre part, pour empêcher le déplacement du deuxième galet 8 à l'intérieur de ce même premier chemin 93 lors de l'avancement du chariot mobile 3 et pour guider le deuxième galet 8 vers le deuxième chemin 94.

Tel qu'illustré, le volet d'obturation unidirectionnel 11 est situé entre et à l'intersection du deuxième segment 931 du premier chemin 93 et du premier segment 940 du deuxième chemin 94. Il est agencé de manière à séparer les deux chemins 93, 94.

Le volet d'obturation unidirectionnel 11 présente, à une première extrémité 110, un arbre de rotation (non visible) disposé dans un orifice (non visible) de la plaque 35 et solidarisé à cette dernière par le biais d'une vis 13 pour permettre le pivotement du volet d'obturation unidirectionnel 1, tel qu'illustré en relation avec la [Fig.4B].

Un ressort 14 est solidarisé, d'une part, au volet d'obturation unidirectionnel 11 et, d'autre part, à la plaque 35. Le ressort 14 est configuré pour ramener et maintenir le volet d'obturation unidirectionnel 11 au travers du premier chemin 93 en l'absence d'une pression exercée par le deuxième galet 8 sur le volet 11. Dans l'exemple illustré, les spires 140 du ressort 14 sont portées par l'arbre de rotation du volet d'obturation unidirectionnel 11 et les deux extrémités rectilignes 141, 142 du ressort 13, également appelées brins, sont couplées à la plaque 35 et au volet d'obturation unidirectionnel 11. Plus précisément, le volet d'obturation unidirectionnel 11 présente un ergot 112 faisant saillie parallèlement à l'arbre de rotation, disposé dans un orifice 353 de la plaque 35 pour retenir l'extrémité 142 du ressort 14.

Le volet d'obturation unidirectionnel 11 présente en outre une deuxième extrémité 111, opposée à la première extrémité 110, une face supérieure 113, disposée en regard du premier chemin 93, et une face inférieure (non visible), disposée en regard du deuxième chemin 94.

Lors du déplacement du deuxième galet 8 dans le deuxième segment 931 du premier chemin 93, tel qu'illustré en relation avec les figures 5A et SB, le deuxième galet 8 fait progressivement pression sur la face supérieure 113 du volet d'obturation unidirectionnel 11, entraînant le pivotement de celui-ci et la compression du ressort 14, jusqu'à venir plaquer la deuxième extrémité 111 du volet d'obturation unidirectionnel 11 contre la paroi du premier segment 940 du deuxième chemin 94. Ainsi, la face supérieure 113 prolonge localement un bord du deuxième segment 931 du premier chemin 93 guidant ainsi le deuxième galet 8 vers la deuxième extrémité 92 de la piste de synchronisation 9.

Lorsque le deuxième galet 8 rejoint la deuxième extrémité 92 de la piste de synchronisation 9, tel qu'illustré en relation avec la [Fig.5C], le ressort 14, qui n'est plus comprimé, ramène le volet d'obturation unidirectionnel 11 au travers du premier chemin 93 pour l'obstruer. Dans une telle position, la face inférieure du volet d'obturation unidirectionnel 11 prolonge localement un bord du premier segment 940 du deuxième chemin 94 incitant le deuxième galet 8 à emprunter le deuxième chemin 94, tel qu'illustré en relation avec la [Fig.5D].

### 6.2.5 Réservoir de piques

On présente en relation avec les **figures6** à **7B** un exemple de structure de réservoir à piques du dispositif de fabrication de brochettes, décrit ci- avant.

La [Fig.6] présente en perspective, et de manière isolée, un exemple de réservoir stockant un lot de piques P non utilisés. Les figures 7A et 7B sont des coupes transversales d'une lame d'extraction, en position basse P_{B} et haute P_{H} respectivement, coopérant avec le réservoir.

Tel qu'illustré, le réservoir 10 est divisé en deux compartiments 100 sensiblement symétriques s'étendant longitudinalement. Chaque compartiment 100 comprend un fond 101 incliné se terminant dans sa partie la plus basse par une fente 102, de forme parallélépipédique rectangle, ménagée verticalement. Une telle inclinaison permet d'orienter les piques vers les lames d'extraction lorsqu'elles sont disposées dans les fentes.

Chaque fente 102 est configurée pour recevoir, d'une part, une lame d'extraction 61 qui lors de sa montée au sein du réservoir assure le prélèvement et l'extraction d'une pique hors du réservoir et, d'autre part, une portion inférieure 64 destinée à empêcher les piques de s'introduire dans la fente 102 en l'absence de la lame d'extraction 61.

La [Fig.7A] représente la lame d'extraction 61 en position basse P_{B}. Dans une telle position, chaque lame d'extraction 61 est, de préférence, entièrement logée dans la fente 102 associée de manière à assurer le positionnement d'une pique P dans la gorge 611 de réception dédiée.

La [Fig.7B] représente la lame d'extraction 61 en position haute P_{H}. Dans une telle position, la lame d'extraction 61 assure le positionnement de la pique P positionnée dans la gorge 611 en vue de l'opération d'embrochage. Malgré le fait que la lame d'extraction 61 est délogée de la fente 102, la portion inférieure 64 reste partiellement disposée à l'intérieur de la fente.

Bien que cela ne soit pas illustré, on comprend que la portion inférieure 64 de la lame reste partiellement disposée à l'intérieur de la fente 102 durant tout le déplacement de la lame d'extraction 61 depuis la position basse P_{B} vers la position haute P_{H}, et inversement.

Un tel agencement permet d'éviter que les piques non utilisées présentes dans le réservoir ne s'échappent de celui-ci par les fentes, sous l'effet de la gravité, ou que des piques non utilisées bloquent la descente de la lame d'extraction.

### 6.2.6 Languettes déformables

Les figures **8A à 8C** présentent, selon différentes vues, un exemple de languettes déformables représentées dans différentes positions.

Les languettes déformables 12 sont aptes à maintenir la pique en regard des orifices lorsque le chariot mobile atteint la position arrière, et donc lorsque l'extracteur mobile de piques 6 arrive en position haute P_{H}, afin d'éviter qu'une utilisation brusque du dispositif 1 éjecte les piques des gorges 611 des lames d'extraction 61.

Pour ce faire, les languettes déformables 12 sont positionnées sur le bâti 2 en dessous des butées de positionnement 4 et sont recourbées vers le réservoir 10 lorsqu'elles ne sont pas sollicitées (au repos). Cela se produit dès lors que les lames d'extraction 61 commencent à être suffisamment descendues pour ne plus entrer en contact avec elles, tel qu'illustré en relation avec les figures 8A et 8B.

Chaque languette déformable présente une ouverture de passage 120 configurée pour permettre le passage d'une partie de la lame d'extraction 61 associée et de la pique P portée par celle-ci.

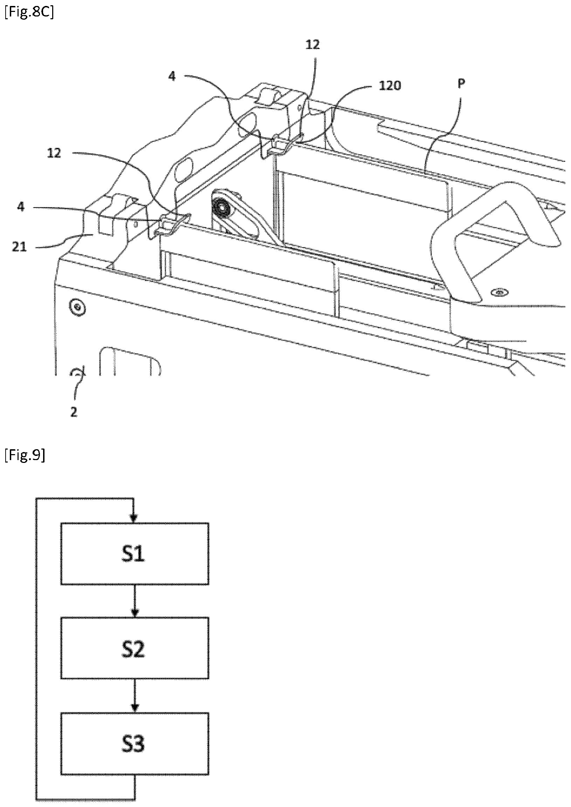

Plus précisément, lors de la montée de l'extracteur mobile de piques 6, la pique portée par chaque lame d'extraction 61 entre en contact avec une portion de la languette déformable 12 correspondante entraînant sa déformation progressive jusqu'à ce qu'elle soit recourbée dans la direction opposée permettant à la pique de traverser l'ouverture de passage 120. Ainsi, lorsque l'extracteur mobile de piques 6 est en position haute, tel qu'illustré sur la [Fig.8C], la languette déformable 12, qui tend à reprendre sa position non déformée vers le bas, plaque la pique dans la gorge de la lame d'extraction 61.

Tel qu'illustré, les languettes déformables 12 prennent ici la forme de boucles réalisées en élastomère. Les languettes déformables sont fixées par le biais de vis 13 sur une paroi inclinée 210 de la partie avant 21 du bâti 2, située sous chaque butée de positionnement 4. Un tel agencement incite les languettes déformables 12 à être recourbées vers le réservoir 10 lorsqu'elles ne sont pas sollicitées par l'extracteur mobile de piques 6.

### 6.2.7 Fonctionnement du dispositif de fabrication de brochettes

On présente désormais en relation avec les **figures 9** à **15C** les étapes principales de fonctionnement du dispositif de fabrication de brochettes, décrit ci- avant.

L'organigramme de la [Fig.9] se focalise sur les étapes principales de fonctionnement du dispositif de fabrication de brochettes de produits alimentaires. Les figures 10A à 15C sont des vues du dispositif de fabrication de brochettes illustrant les étapes principales de fonctionnement, pour une meilleure compréhension de la technique proposée.

En position initiale, illustrée en relation avec les figures 10A à 10C, le chariot mobile 3 est plaqué contre la portion avant 21 du bâti 2 de manière à être en position avant P_{AV} , proche de l'utilisateur. Dans une telle position, le deuxième galet (non visible) porté par la deuxième extrémité 72 du levier de synchronisation 7 est positionné dans la première extrémité 91 de la piste de synchronisation 9. En outre, le plateau supérieur 32 est rabattu sur le plateau 31.

Par ailleurs, l'extracteur mobile de piques 6 est plaqué contre la partie inférieure 212 de la portion avant 21 du bâti 2 de manière à être en position basse P_{B}. Dans une telle position, le premier galet 62 de l'extracteur mobile de piques 6 est situé à proximité de l'extrémité arrière de la lumière oblongue 710 ménagée sur la première extrémité 71 du levier de synchronisation 7. Dans cette position encore, les lames d'extraction 61 de l'extracteur mobile de piques 6 sont logées dans les fentes 102 des compartiments 100 du réservoir afin qu'une pique s'insère dans la gorge 611 de chaque lame d'extraction 61.

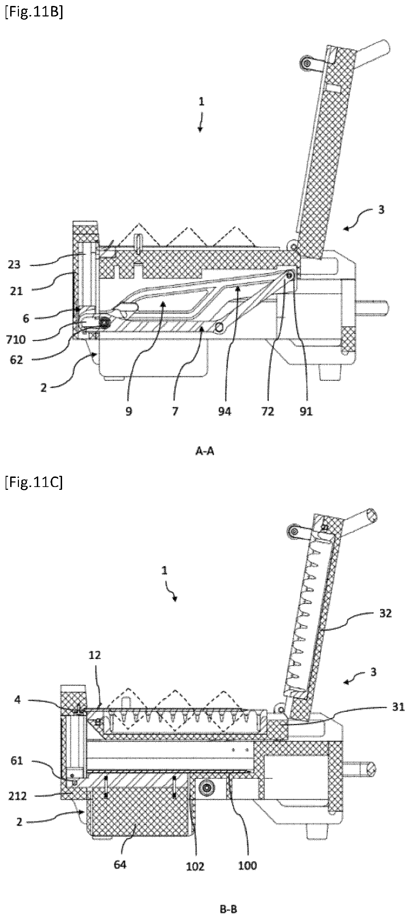

Au cours d'une première étape, référencée S1 et illustrée en relation avec les figures 11A à 11C, l'opérateur dispose les denrées alimentaires dans les évidements du plateau inférieur 31 du chariot mobile. Si un cycle de fonctionnement du dispositif de fabrication de brochettes a antérieurement été mis en oeuvre auparavant, l'opérateur retire bien évidemment du plateau inférieur 31 les brochettes fabriquées avant d'insérer des denrées alimentaires dans les évidements du plateau inférieur 31.

Pour ce faire, l'opérateur manipule les poignées 5 du dispositif 1 pour amener le plateau supérieur 32 en position ouverte P_{O}, dépose les denrées alimentaires (représentées en traits discontinus) sur les moules 311 du plateau inférieur 31 de manière à les centrer par rapport aux orifices 34 puis rabat le plateau supérieur 32 contre le plateau inférieur 31 pour revenir en position fermée P_{F}. Les denrées alimentaires disposées dans les cavités du chariot mobile 3, sont ainsi maintenues sans être écrasées par les moules 311 et contre moules 321 des plateaux inférieur 31 et supérieur 32 respectivement.

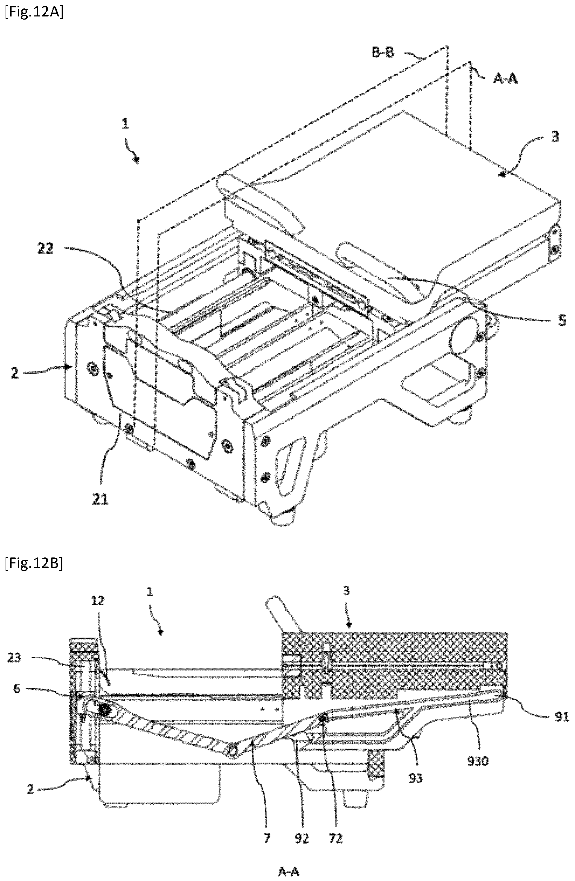

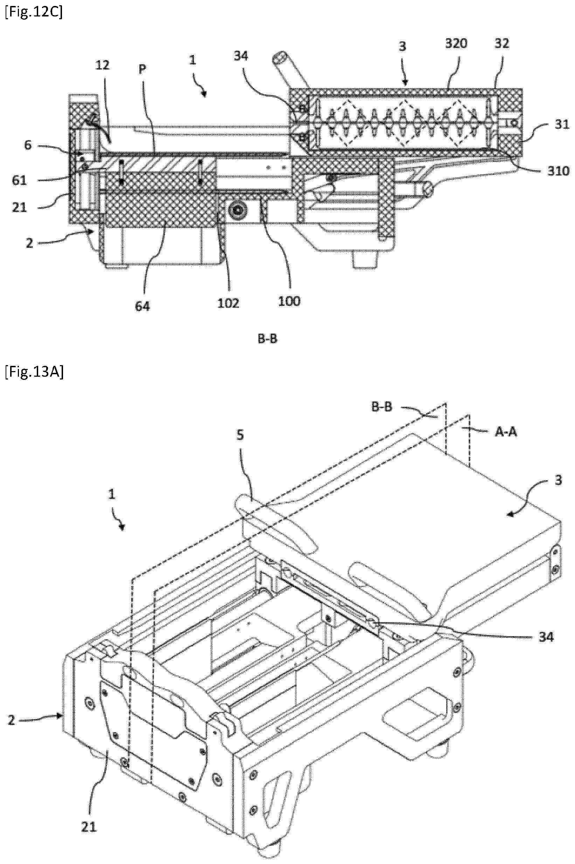

Après rabattement du plateau supérieur 32 contre le plateau inférieur 31, l'opérateur manipule les poignées 5 pour reculer ou pousser le chariot mobile 3 afin de mettre en place les piques en position d'embrochage (deuxième étape, référencée S2 et illustrée en relation avec les figures 12A à 13C).

Au cours d'une première phase, illustrée en relation avec les figures 12A à 12C, le recul du chariot mobile 3 le long des glissières 22 force le deuxième galet 8 à quitter la première extrémité 91 de la piste de synchronisation 9 pour emprunter le premier segment 930 du premier chemin 93. La pente du premier segment 930 étant faible, le déplacement du deuxième galet 8 provoque un pivotement lent du levier de synchronisation 7. La première extrémité 71 du levier de synchronisation 7 déplace donc le premier galet 62 pour faire coulisser lentement la traverse 60 le long des glissières 23. L'extracteur mobile de piques 6 quitte la position basse permettant aux lames d'extraction 61 de se déloger des fentes 102 des compartiments 100 du réservoir afin d'extraire des piques P. La montée lente de l'extracteur mobile de piques permet d'éviter que les lames d'extraction 61 et les piques extraites ne heurtent le chariot mobile 3 situé au-dessus de celles-ci.

En outre, les languettes déformables 12, qui ne sont pas sollicitées sont recourbées vers le réservoir de piques.

Au cours d'une deuxième phase de recul, les lames d'extraction 61 portant une pique sont suffisamment éloignées du chariot mobile 3, le deuxième galet 8 emprunte le deuxième segment 931 du premier chemin 93 jusqu'à atteindre la deuxième extrémité 92 de la piste de synchronisation 9 en ayant préalablement franchi le volet d'obturation unidirectionnel 11, tel que décrit en relation avec les figures 5A à 5D. La pente du deuxième segment 931 étant plus importante que celle du premier segment 930, le déplacement du deuxième galet 8 provoque un pivotement rapide du levier de synchronisation 7 et donc une montée rapide de l'extracteur mobile de piques 6 et de ses lames d'extraction 61. La montée rapide des lames d'extraction 61 portant chacune une pique P permet de pallier la montée lente de la première phase.

Lors cette deuxième phase, avant que l'extracteur mobile de piques 6 atteigne la position haute P_{H}, les piques s'insèrent progressivement dans les ouvertures de passage des languettes déformables 12 et la montée de l'extracteur mobile entraine ensuite la déformation progressive des languettes déformables 12 vers le haut.

Lorsque le chariot mobile 3 est en position arrière P_{AR}, telle qu'illustrée en relation avec les figures 13A à 13C, le deuxième galet 8 est situé dans la deuxième extrémité 92 de la piste de synchronisation 9, le pivotement du levier de synchronisation 7 est terminé et l'extracteur mobile de piques 6 est plaqué contre la partie supérieur 211 de la portion avant 21 du bâti 2 de sorte à ce qu'il soit en position haute P_{H} permettant ainsi aux piques d'être en position d'embrochage.

Dans une telle position, le premier galet 62 de l'extracteur mobile de piques 6 est située à proximité de l'extrémité avant de la lumière oblongue 710 ménagée sur la première extrémité 71 du levier de synchronisation 7. Dans une telle position encore, les portions inférieures 64 des lames d'extraction 61 sont partiellement disposées dans les fentes 102 des compartiments 100 du réservoir pour éviter que les piques ne s'introduisent dans les fentes 102. En outre, la déformation des languettes déformables 12 est telle qu'elles maintiennent la base des piques pour éviter que les chocs survenant lors de l'arrivée du chariot en butée arrière ne déloge les piques des rainures des lames d'extraction 61.

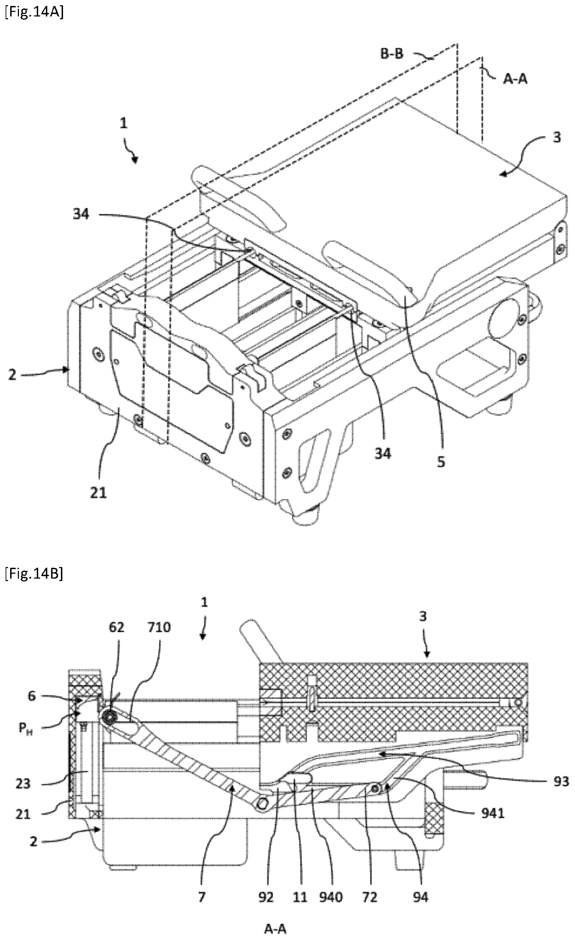

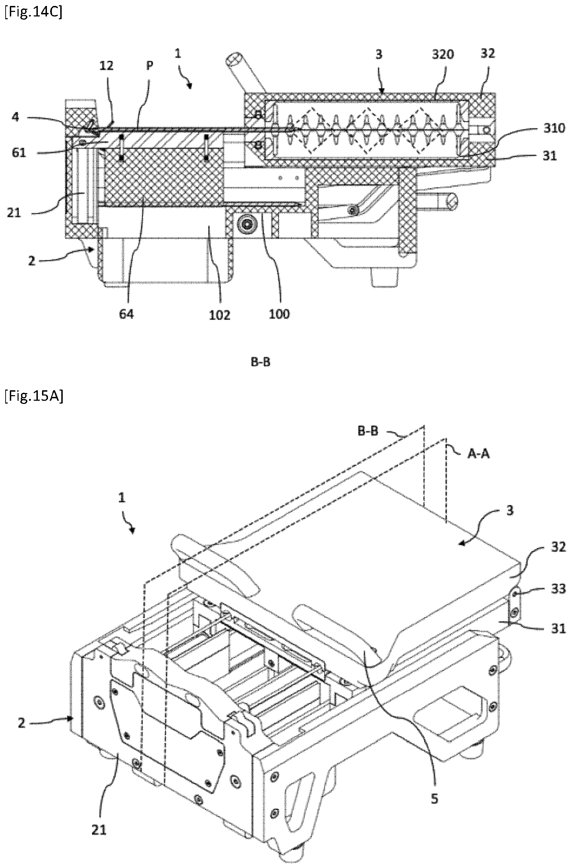

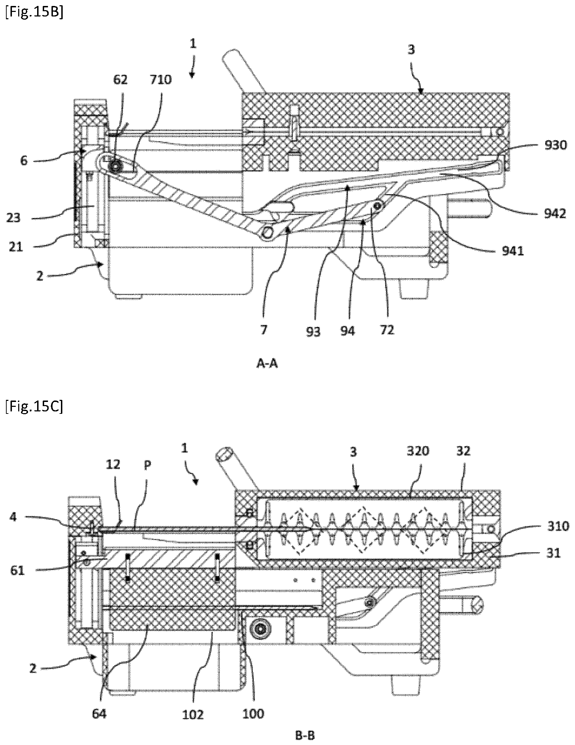

Au cours d'une troisième étape d'embrochage, référencée S3 et illustrée en relation avec les figures 14A à 15C, l'opérateur manipule les poignées 5 pour tirer ou déplacer vers l'avant, c'est-à-dire vers lui, le chariot mobile 3 afin de réaliser l'embrochage des denrées alimentaires sur les piques, c'est-à-dire l'insertion des piques dans les aliments situés entre les plateaux dans le chariot mobile.

Au cours d'une première phase d'avancement, illustrée en relation avec les figures 14A à 14C, l'avancement du chariot mobile 3 force le deuxième galet 8 à quitter la deuxième extrémité 92 de la piste de synchronisation 9 pour emprunter le premier segment 940 du deuxième chemin 94. Le volet d'obturation unidirectionnel 11 empêche le deuxième galet 8 d'emprunter le premier chemin 93, tel que décrit en relation avec les figures 5A à 5D. La pente du premier segment 940 du deuxième chemin 94 étant nulle, le déplacement du deuxième galet 8 dans cette portion n'engendre aucun pivotement du levier de synchronisation 7. L'extracteur mobile de piques 6 reste donc en position haute P_{H} afin que les lames d'extraction 61 maintiennent les piques P lors du début de l'opération d'embrochage, comme décrit ci-après.

Lors de cette première phase d'avancement, les piques s'introduisent dans les orifices 34 du chariot mobile. Lorsque les piques entrent en contact avec les premières denrées alimentaires, dans un premier temps, les piques reculent légèrement et les bases des piques viennent se positionner dans les butées de positionnement 4. Ce n'est qu'après une telle mise en appui que les piques commencent à s'embrocher dans les denrées alimentaires.

Au cours d'une deuxième phase d'avancement, initiée lorsque le chariot mobile 3 arrive à proximité des lames d'extraction, la descente rapide des lames d'extraction 61 survient, telle qu'illustrée en relation avec les figures 15A à 15B.

Dans cette deuxième phase, le deuxième galet 8 emprunte le deuxième segment 941 du deuxième chemin 94. La pente du deuxième segment 941 du deuxième chemin 94 étant importante, tel que décrit en relation avec la [Fig.4A] notamment, le déplacement du deuxième galet engendre un pivotement rapide du levier de synchronisation 7. La première extrémité 71 du levier de synchronisation 7 déplace donc le premier galet 62 pour faire coulisser rapidement la traverse 60 le long des glissières 23. L'extracteur mobile de piques 6 quitte ainsi la position haute afin de permettre aux lames d'extraction 61 de se dégager rapidement tout en laissant les piques P en position d'embrochage. Une descente rapide des lames d'extraction 61 est nécessaire pour pallier leur immobilité lors de la première phase de descente afin d'éviter qu'elles ne percutent le chariot mobile 3.

Lors de cette deuxième phase, les piques continuent de s'insérer dans les cavités contenant les denrées alimentaires. Par ailleurs, les portions inférieures 64 des lames d'extraction 61 s'insère dans les fentes 102 des compartiments 100 du réservoir.

Au cours d'une troisième phase d'avancement, initiée lorsque les lames d'extraction 61 sont suffisamment éloignées du chariot mobile 3, le deuxième galet 8 emprunte le troisième segment 942 du deuxième chemin 94 jusqu'à atteindre la première extrémité 91 de la piste de synchronisation 9 pour ramener le dispositif 1 en position avancée. Du fait que le troisième segment 942 du deuxième chemin 94 correspondant à une portion du premier segment 930 du premier chemin 93 et présente de ce fait la même pente, tel que décrit en relation avec la [Fig.3D] notamment, le déplacement du deuxième galet provoque un pivotement lent du levier de synchronisation 7 et donc une descente lente de l'extracteur mobile de piques 6 et de ses lames d'extraction 61.

Lors cette troisième phase, le chariot mobile 3 recourbe progressivement les languettes déformables 12 vers le haut (à l'opposé du réservoir) jusqu'à les plaquer contre la partie avant 21 du bâti 2. Ainsi, les languettes déformables 12 ne perturbent aucunement l'opération d'embrochage.

Lorsque cette troisième phase d'avancement est finalisée, le dispositif 1 est alors en position initiale, telle qu'illustrée en relation avec les figures 10A à 10C, et les piques sont logées dans le chariot mobile au travers des denrées alimentaires, les brochettes obtenues pouvant être alors récupérées par l'utilisateur.

La fabrication des brochettes est finalisée et peut être répétée selon l'ordre des étapes précédemment décrites.

On constate qu'avec un tel dispositif de fabrication de brochettes, la mise en place des piques en position d'embrochage se fait automatiquement sans intervention de l'opérateur.

En outre, la mise en place des piques est réalisée lors du déplacement du chariot mobile présentant les cavités contenant les denrées alimentaires. Cette mise en place automatique des piques ne rallonge pas la durée du processus de fabrication de brochettes mais, au contraire, le réduit. Cela se traduit notamment par un accroissement des cadences de fabrication et une amélioration du confort et des conditions de travail de l'opérateur.

Par ailleurs, excepté pour disposer les denrées alimentaires dans les cavités du chariot mobile, l'opérateur peut garder les mains sur la ou les poignées de manipulation pendant tout le processus de fabrication des brochettes. A nouveau, cela permet une amélioration du confort de l'opérateur.

### 6.3 Autres modes de réalisation et caractéristiques diverses

De préférence, les trous ménagés dans la traverse de l'extracteur mobile de piques qui sont configurés pour coopérer avec les tiges verticales du bâti, portent des douilles à billes pour assurer un guidage précis de l'extracteur mobile de piques par rapport au bâti.

Dans un mode de réalisation particulier, les portions inférieures des lames d'extraction sont réalisées en un matériau plastique afin de limiter le poids et les coûts de production du dispositif de fabrication de brochettes.

Selon des mises en oeuvre particulières, non illustrés, les moyens permettant de synchroniser le déplacement de l'extracteur mobile de piques au déplacement du chariot mobile mettent en oeuvre des moyens électroniques et/ou électromécaniques. Ainsi, les moyens de synchronisation comprennent, selon un mode de réalisation particulier, des premiers capteurs configurés pour déterminer la position horizontale du chariot mobile et la vitesse de déplacement de celui-ci, des deuxième capteurs configurés pour déterminer la position verticale des lames d'extraction et la vitesse de déplacement de celles-ci, au moins un actionneur, linéaire ou rotatif, configuré pour déplacer verticalement les lames d'extraction et une unité de traitement, tel un automate, configurée pour commander, en position et vitesse, le déplacement des lames d'extraction par rapport à la position et vitesse de déplacement du chariot mobile portant les plateaux.

Il est possible de ne pas mettre en oeuvre de capteurs de vitesse.

Dans un mode de réalisation particulier, le dispositif comprend en outre une interface permettant à un opérateur de régler tout ou partie des paramètres de fonctionnement du dispositif, et en particulier les moyens de synchronisation électroniques. Par exemple, le dispositif peut comprendre des butées électroniquement réglables de manière à bloquer le coulissement du chariot mobile à une position prédéterminée en fonction de la longueur des piques saisie sur l'interface. Ainsi, l'amplitude de coulissement du chariot mobile sera réduite pour des piques courtes par exemple. Cela permet notamment d'améliorer le confort et la cadence de travail de l'opérateur et de minimiser les actions superflues.

Selon une mise en oeuvre particulière, non illustrée, le réservoir de piques comprend un unique compartiment présentant un fond convexe et dont les parties basses se terminent par des fentes verticales.

Selon une approche particulière, non illustrée, la portion inférieure de chaque lame d'extraction présente sensiblement la forme d'un peigne de sorte à réduire davantage le poids du dispositif de fabrication de brochettes. Selon une autre approche particulière, non illustrée, chaque lame d'extraction et sa portion inférieure sont réalisées en une même pièce monobloc.

Dans un autre mode de réalisation, non illustré, chaque languette déformable présente une extrémité fixée au-dessus d'une butée de positionnement et une extrémité libre sur laquelle est ménagée l'ouverture de passage. Ainsi, lorsque l'extracteur mobile de piques est en position haute, la languette déformable qui tend à reprendre sa position non déformée, exerce une pression sur la pique permettant son maintien dans la gorge de la lame d'extraction.

Dans un autre mode de réalisation, non illustré, les languettes déformables sont portées par le chariot mobile soit par le plateau supérieur soit par le plateau inférieur. Le choix du positionnement des languettes déformables dépend essentiellement de leur forme et/ou du positionnement des ouvertures de passage, si elles sont présente, des lames d'extraction.

Bien évidemment, l'invention n'est pas limitée aux modes de réalisation décrits précédemment et fournis uniquement à titre d'exemples. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

Par exemple, l'homme du métier saura adapter la forme et la disposition de l'extracteur mobile de piques, ainsi que des éléments qui le composent, en fonction de la structure globale du dispositif de fabrication de brochettes, et notamment du nombre de brochettes que celui-ci doit fabriquer. Par exemple, si le dispositif de fabrication de brochettes est configuré pour permettre la fabrication simultanée de quatre brochettes, le dispositif peux comprendre deux supports mobiles de piques conforme à celui illustré ou un uniquement extracteur mobile de piques portant quatre lames d'extraction et un premier galet, voire plusieurs pour une meilleure répartition des efforts. L'homme du métier saura en outre déterminer la longueur et/ou la pente de chaque segment formant la piste de synchronisation de manière à obtenir le fonctionnement décrit en fonction des dimensions et des variantes structurelles du dispositif notamment.

Selon un autre exemple, la disposition du levier de synchronisation et de la piste de synchronisation est intervertie, en ménageant la piste de synchronisation dans/sur l'extracteur mobile et fixer de manière pivotante le levier de synchronisation au chariot mobile. Selon un autre exemple encore, le dispositif de fabrication de brochettes comprend un support fixe portant les plateaux inférieur et supérieur et un bâti/châssis mobile. Ainsi, l'opérateur ne coulisse donc plus les plateaux mais le châssis mobile portant l'extracteur mobile de piques.

Plus généralement, la technique proposée couvre toutes les mises en oeuvre du principe selon lequel le déplacement d'un organe d'extraction d'au moins une pique présente dans un réservoir et de positionnent de ladite au moins une pique en regard d'au moins une cavité des plateaux contenant les denrées alimentaires, est synchronisé au déplacement du chariot mobile portant les plateaux.

La solution de la technique proposée permet donc de disposer d'un dispositif de fabrication de brochettes permettant un positionnement automatique et immédiat des piques, sans intervention manuelle, en ce sens qu'il n'engendre aucune interruption, ou une interruption négligeable, dans la manipulation du chariot mobile.

Le dispositif permet la fabrication de brochettes d'aliments tels que viandes et/ou légumes, poissons, fruits ou autres.

Les piques peuvent être en bois, plastique ou métal.

Par ailleurs, le plateau supérieur peut se déplacer parallèlement au plateau inférieur et non pas de façon pivotante par rapport à ce dernier.

Selon différents aspects, la technique proposée présente donc tout ou partie des avantages suivants, en fonction des modes de réalisation retenus :
- permettre la mise en place automatique des piques en position d'embrochage ;
- permettre la mise en place immédiate des piques en position d'embrochage ;
- garantir l'autonomie du dispositif de fabrication d'au moins une brochette par rapport à des systèmes et/ou installations extérieur ;
- permettre une utilisation simplifiée ;
- permettre un encombrement limité ;
- permettre un transport aisé ;
- permettre une installation simplifiée et rapide ;
- garantir une longévité importante ;
- nécessiter une maintenance limitée ;
- garantir une maintenance simplifiée ;
- améliorer le confort de l'opérateur ;
- garantir la sécurité de l'opérateur ;
- limiter les pertes de consommables ;
- etc.

## Revendications

1. Dispositif (1) de fabrication d'au moins une brochette comprenant un bâti (2) et un chariot mobile (3) monté mobile en coulissement sur le bâti (2) entre une position avant (P_{AV}) et une position arrière (P_{AR}), et inversement, ledit chariot mobile (3) comprenant un plateau inférieur (31) coopérant avec un plateau supérieur (32), formant couvercle, le plateau supérieur (32) étant monté mobile entre une position ouverte (P_{O}) et une position fermée ou rabattue (P_{F}), les plateaux inférieur et supérieur (31, 32) présentant des renfoncements de réception de denrées alimentaires formant au moins une rangée de cavités alignées lorsque le plateau supérieur (32) est rabattu sur le plateau inférieur (31) et au moins un orifice (34) de passage d'une pique débouchant dans l'axe de ladite au moins une rangée de cavités alignées, l'embrochage de ladite au moins une pique dans les denrées alimentaires logées dans ladite au moins une rangée de cavités alignées s'effectuant en déplaçant le chariot mobile (3) de la position arrière (P_{AR}) vers la position avant (P_{AV}), ledit dispositif comprenant au moins un réservoir (10) de piques (P) et un extracteur mobile de piques (6) configuré pour s'engager à l'intérieur du réservoir de façon à prélever sélectivement au moins une pique dans ledit au moins un réservoir (10) et extraire ladite au moins une pique hors dudit réservoir pour la positionner en regard dudit au moins un orifice (34) lorsque le chariot mobile (3) est en position arrière (P_{AR}), et comprenant en outre des moyens de synchronisation configurés pour synchroniser le déplacement dudit extracteur mobile de piques (6) au déplacement dudit chariot mobile (3) comprenant les plateaux inférieur et supérieur (31, 32).

2. Dispositif (1) de fabrication d'au moins une brochette selon la revendication 1, **caractérisé en ce que** ledit extracteur mobile de piques (6) est monté mobile en coulissement sur le bâti (2) entre une position basse (P_{B}) et une position haute (P_{H}), et inversement, l'extraction et le positionnement des piques (P) en regard dudit au moins un orifice (34) s'effectuant en déplaçant ledit extracteur mobile de piques (6) de la position basse (P_{B}) vers la position haute (P_{H}), et **en ce que** lesdits moyens de synchronisation sont configurés pour synchroniser :
- la montée dudit extracteur mobile de piques (6) de la position basse (P_{B}) vers la position haute (P_{H}) avec le déplacement dudit chariot mobile (3) de la position avant (P_{AV}) vers la position arrière (P_{AR}), correspondant à un recul du chariot mobile (3), et
- la descente dudit extracteur mobile de piques (6) de la position haute (P_{H}) vers la position basse (P_{B}) avec le déplacement dudit chariot mobile (3) de la position arrière (P_{AR}) vers la position avant (P_{AV}), correspondant à un avancement dudit chariot mobile (3).

3. Dispositif (1) de fabrication d'au moins une brochette selon la revendication 2, **caractérisé en ce que** lesdits moyens de synchronisation comprennent au moins un levier de synchronisation (7) monté pivotant sur ledit bâti (2) et présentant :
- une première extrémité (71) reliée dudit extracteur mobile de piques (6), et
- une deuxième extrémité (72), supportant un deuxième galet (8) disposé à l'intérieur d'une piste de synchronisation (9) ménagée sur ledit chariot mobile (3), ladite piste de synchronisation (9) présentant une première extrémité (91), associée à ladite position basse (P_{B}) dudit extracteur mobile de piques (6), et une deuxième extrémité (92), associée à ladite position haute (P_{H}) dudit extracteur mobile de piques (6).

4. Dispositif (1) de fabrication d'au moins une brochette selon la revendication 3, **caractérisé en ce que** le levier de synchronisation (7) présente à sa première extrémité (71) une lumière oblongue (710) coopérant avec un premier galet (62) porté par ledit extracteur mobile de piques (6) de sorte à ce que le pivotement du levier de synchronisation (7) entraîne le déplacement dudit premier galet (62) et le déplacement de l'extracteur mobile de piques (6) entre les positions haute (P_{H}) et basse (P_{B}), et inversement.

5. Dispositif (1) de fabrication d'au moins une brochette selon la revendication 4, **caractérisé en ce que** ledit extracteur mobile de piques (6) comprend une traverse (60) portant ledit premier galet (62), ledit bâti (2) et ladite traverse (60) portant des moyens de coulissement permettant le déplacement vertical de l'extracteur mobile de piques (6) entre les positions haute (P_{H}) et basse (P_{B}), et inversement.

6. Dispositif (1) de fabrication d'au moins une brochette selon l'une quelconque des revendications 3 à 5, **caractérisé en ce que** ladite piste de synchronisation (9) comprend des premier et deuxième chemins (93, 94) s'étendant entre lesdites première et deuxième extrémités (91, 92) de ladite piste de synchronisation (9), ledit premier chemin (93) étant configuré pour être emprunté par ledit deuxième galet (8) lors du recul dudit chariot mobile (3), ledit deuxième chemin (94) étant configuré pour être empruntée par ledit deuxième galet (8) lors de l'avancement dudit chariot mobile (3).

7. Dispositif (1) de fabrication d'au moins une brochette selon la revendication 6, **caractérisé en ce qu'**il comprend au moins un volet d'obturation unidirectionnel (11) autorisant le déplacement dudit deuxième galet (8) à l'intérieur du premier chemin (93) lors du recul dudit chariot mobile (3) et empêchant le déplacement dudit deuxième galet (8) à l'intérieur du premier chemin (93) lors de l'avancement dudit chariot mobile (3) pour guider le deuxième galet (8) dans le deuxième chemin (94).

8. Dispositif (1) de fabrication d'au moins une brochette selon l'une quelconque des revendications 2 à 7, **caractérisé en ce que** ledit extracteur mobile de piques (6) comprend en outre au moins une lame d'extraction (61) d'une pique présentant sur sa face supérieure (610) une gorge (611) de réception et de maintien d'une pique du réservoir (10).

9. Dispositif (1) de fabrication d'au moins une brochette selon la revendication 8, **caractérisé en ce que** ladite au moins une lame d'extraction (61) d'une pique est disposée à l'intérieur d'une fente (102) ménagée dans le fond du réservoir (10) de piques lorsque ledit extracteur mobile de piques (6) est en position basse (P_{B}), ladite au moins une lame d'extraction (61) présentant une portion inférieure (64) disposée à l'intérieur de la fente (102) lorsque ledit extracteur mobile de piques (6) est en position haute (P_{H}).

10. Dispositif (1) de fabrication d'au moins une brochette selon l'une des revendications 8 ou 9, **caractérisé en ce que** ledit bâti (2) comprend au moins une butée de positionnement (4) d'une pique contre laquelle la pique, disposée dans la gorge (611) de réception et de maintien de ladite au moins une lame d'extraction (61) en position haute (P_{H}) dudit extracteur mobile de piques (6), vient en appui en début d'embrochage de la pique dans les denrées alimentaires logées dans ladite au moins une rangée de cavités alignées.

11. Dispositif (1) de fabrication d'au moins une brochette selon l'une des revendications 8 à 10, **caractérisé en ce qu'**il comprend au moins une languette déformable (12) apte à maintenir la pique dans la gorge (611) de réception et de maintien de ladite au moins une lame d'extraction (61) en position haute (P_{H}) dudit extracteur mobile de piques (6).

12. Dispositif (1) de fabrication d'au moins une brochette selon les revendications 10 et 11, **caractérisé en ce que** ladite au moins une languette déformable (12) est positionnée sur ledit bâti (2) au-dessous de ladite au moins une butée de positionnement (4), et **en ce que** ladite languette déformable (12) prend la forme d'une boucle présentant une ouverture de passage (120) d'une pique portée par une lame d'extraction (61) dudit extracteur mobile de piques (6), ladite languette déformable (12) étant recourbée vers le réservoir (10) lorsque ledit extracteur mobile de piques (6) est en position basse (P_{B}) et recourbée dans la direction opposée lorsque ledit extracteur mobile de piques (6) est en position haute (P_{H}), une pique traversant l'ouverture de passage (120) dans ladite position haute (P_{H}) dudit extracteur mobile de piques (6).

## Patentansprüche

1. Vorrichtung (1) zum Herstellen mindestens eines Spießes mit einem Gestell (2) und einem beweglichen Wagen (3), der gleitend auf dem Gestell (2) zwischen einer vorderen Position (P_{AV}) und einer hinteren Position (P_{AR}), und umgekehrt, beweglich montiert ist, wobei der bewegliche Wagen (3) eine untere Platte (31) aufweist, die mit einer oberen Platte (32) zusammenwirkt und einen Deckel bildet, wobei die obere Platte (32) zwischen einer offenen Position (Po) und einer geschlossenen oder umgeklappten Position (P_{F}) beweglich montiert ist, wobei die untere und obere Platte (31, 32) Vertiefungen zur Aufnahme von Lebensmitteln aufweisen, die mindestens eine Reihe von ausgerichteten Vertiefungen bilden, wenn die obere Platte (32) auf die untere Platte (31) umgeklappt ist, sowie mindestens eine Öffnung (34) zum Durchführen eines Spießes, die in der Achse der mindestens einen Reihe von ausgerichteten Vertiefungen mündet, wobei das Aufspießen des mindestens einen Spießes in die Lebensmittel, die in der mindestens einen Reihe von ausgerichteten Hohlräumen untergebracht sind, erfolgt, indem der bewegliche Wagen (3) aus der hinteren Position (P_{AR}) in Richtung der vorderen Position (P_{AV}) bewegt wird, wobei die Vorrichtung mindestens einen Behälter (10) für Spieße (P) und einen beweglichen Spießextraktor (6) aufweist, der dazu eingerichtet ist, in das Innere des Behälters einzugreifen, um selektiv mindestens einen Spieß in dem mindestens einen Behälter (10) zu entnehmen und den mindestens einen Spieß aus dem Behälter herauszuziehen, um ihn gegenüber der mindestens einen Öffnung (34) zu positionieren, wenn sich der bewegliche Wagen (3) in der hinteren Position (P_{AR}) befindet, und außerdem mit Synchronisationsmitteln, die dazu eingerichtet sind, die Bewegung des beweglichen Spießextraktors (6) mit der Bewegung des beweglichen Wagens (3) zu synchronisieren, der die untere und die obere Platte (31, 32) aufweist.

2. Vorrichtung (1) zum Herstellen mindestens eines Spießes nach Anspruch 1, **dadurch gekennzeichnet, dass** der bewegliche Spießextraktor (6) auf dem Gestell (2) zwischen einer unteren Position (P_{B}) und einer oberen Position (P_{H}) und umgekehrt gleitend beweglich montiert ist, wobei das Herausziehen und Positionieren der Spieße (P) gegenüber der mindestens einen Öffnung (34) erfolgt, indem der bewegliche Spießextraktor (6) von der unteren Position (P_{B}) in die obere Position (P_{H}) bewegt wird, und dadurch, dass die Synchronisationsmittel dazu eingerichtet sind, folgendes zu synchronisieren:
- das Anheben des beweglichen Spießextraktors (6) aus der unteren Position (P_{B}) in die obere Position (P_{H}) mit der Bewegung des beweglichen Wagens (3) aus der vorderen Position (P_{AV}) in die hintere Position (P_{AR}), was einem Rückzug des beweglichen Wagens (3) entspricht, und
- das Absenken des beweglichen Spießextraktors (6) aus der oberen Position (P_{H}) in die untere Position (P_{B}) mit der Bewegung des beweglichen Wagens (3) aus der hinteren Position (P_{AR}) in die vordere Position (P_{AV}), was einem Vorschub des beweglichen Wagens (3) entspricht.

3. Vorrichtung (1) zum Herstellen mindestens eines Spießes nach Anspruch 2, **dadurch gekennzeichnet, dass** die Synchronisationsmittel mindestens einen Synchronisationshebel (7) aufweisen, der schwenkbar an dem Gestell (2) angebracht ist und aufweist:
- ein erstes Ende (71), das mit dem besagten beweglichen Spießextraktor (6) verbunden ist, und
- ein zweites Ende (72), das eine zweite Rolle (8) trägt, die innerhalb einer Synchronisationsbahn (9) angeordnet ist, die an dem beweglichen Schlitten (3) ausgebildet ist, wobei die Synchronisationsbahn (9) ein erstes Ende (91), das mit der unteren Position (P_{B}) des beweglichen Spießextraktors (6) verbunden ist, und ein zweites Ende (92) aufweist, das mit der oberen Position (P_{H}) des beweglichen Spießextraktors (6) verbunden ist.

4. Vorrichtung (1) zum Herstellen mindestens eines Spießes nach Anspruch 3, **dadurch gekennzeichnet, dass** der Synchronisationshebel (7) an seinem ersten Ende (71) ein längliches Lumen (710) aufweist, das mit einer ersten Rolle (62) zusammenwirkt, die von dem beweglichen Spießextraktor (6) getragen wird, so dass das Schwenken des Synchronisationshebels (7) die Verschiebung der ersten Rolle (62) und die Verschiebung des beweglichen Spießextraktors (6) zwischen der oberen (P_{H}) und der unteren (P_{B}) Position, und umgekehrt, zur Folge hat.

5. Vorrichtung (1) zum Herstellen mindestens eines Spießes nach Anspruch 4, **dadurch gekennzeichnet, dass** der bewegliche Spießextraktor (6) einen Querträger (60) aufweist, der die erste Rolle (62) trägt, wobei das Gestell (2) und der Querträger (60) Gleitmittel tragen, die die vertikale Verschiebung des beweglichen Spießextraktors (6) zwischen der oberen (P_{H}) und der unteren (P_{B}) Position, und umgekehrt, ermöglichen.

6. Vorrichtung (1) zum Herstellen mindestens eines Spießes nach einem der Ansprüche 3 bis 5, **dadurch gekennzeichnet, dass** die Synchronisationsbahn (9) einen ersten und einen zweiten Weg (93, 94) aufweist, die sich zwischen dem ersten und dem zweiten Ende (91, 92) der Synchronisationsbahn (9) erstrecken, wobei der erste Weg (93) dazu eingerichtet ist, von der zweiten Rolle (8) beim Rückzug des beweglichen Wagens (3) befahren zu werden, und der zweite Weg (94) dazu eingerichtet ist, von der zweiten Rolle (8) beim Vorschub des beweglichen Wagens (3) befahren zu werden.

7. Vorrichtung (1) zum Herstellen mindestens eines Spießes nach Anspruch 6, **dadurch gekennzeichnet, dass** sie mindestens eine unidirektionale Verschlussklappe (11) aufweist, die die Verschiebung der zweiten Rolle (8) im Inneren des ersten Weges (93) beim Rückwärtsfahren des beweglichen Wagens (3) zulässt und die Verschiebung der zweiten Rolle (8) im Inneren des ersten Weges (93) beim Vorwärtsfahren des beweglichen Wagens (3) verhindert, um die zweite Rolle (8) in den zweiten Weg (94) zu führen.

8. Vorrichtung (1) zum Herstellen mindestens eines Spießes nach einem der Ansprüche 2 bis 7, **dadurch gekennzeichnet, dass** der bewegliche Spießextraktor (6) außerdem mindestens eine Klinge (61) zum Herausziehen eines Spießes aufweist, die auf ihrer Oberseite (610) eine Nut (611) zur Aufnahme und zum Halten eines Spießes aus dem Behälter (10) aufweist.

9. Vorrichtung (1) zum Herstellen mindestens eines Spießes nach Anspruch 8, **dadurch gekennzeichnet, dass** die mindestens eine Klinge (61) zum Herausziehen eines Spießes im Inneren eines Schlitzes (102) angeordnet ist, der im Boden des Spieße-Behälters (10) angeordnet ist, wenn sich der bewegliche Spießextraktor (6) in der unteren Position (P_{B}) befindet, wobei die mindestens eine Herauszieh-Klinge (61) einen unteren Abschnitt (64) aufweist, der innerhalb des Schlitzes (102) angeordnet ist, wenn sich der bewegliche Spießextraktor (6) in der oberen Position (P_{H}) befindet.

10. Vorrichtung (1) zum Herstellen mindestens eines Spießes nach einem der Ansprüche 8 oder 9, **dadurch gekennzeichnet, dass** das Gestell (2) mindestens einen Anschlag (4) zur Positionierung eines Spießes aufweist, gegen den der Spieß, der in der Nut (611) zur Aufnahme und zum Halten der mindestens einen Herauszieh-Klinge (61) in der oberen Position (P_{H}) des beweglichen Spießextraktors (6) angeordnet ist, zu Beginn des Aufspießens des Spießes in die Lebensmittel, die in der mindestens einen Reihe von ausgerichteten Vertiefungen untergebracht sind, zur Anlage kommt.

11. Vorrichtung (1) zum Herstellen mindestens eines Spießes nach einem der Ansprüche 8 bis 10, **dadurch gekennzeichnet, dass** sie mindestens eine verformbare Zunge (12) aufweist, die geeignet ist, den Spieß in der Nut (611) zur Aufnahme und zum Halten der mindestens einen Herauszieh-Klinge (61) in der oberen Position (P_{H}) des beweglichen Spießextraktors (6) zu halten.

12. Vorrichtung (1) zum Herstellen mindestens eines Spießes nach den Ansprüchen 10 und 11, **dadurch gekennzeichnet, dass** die mindestens eine verformbare Zunge (12) auf dem Gestell (2) unterhalb des mindestens einen Positionier-Anschlags (4) positioniert ist, und dass die verformbare Zunge (12) die Form einer Schlaufe annimmt, die eine Durchgangsöffnung (120) für einen Spieß aufweist, der von einer Ausziehklinge (61) des beweglichen Spießextraktors (6) getragen wird, wobei die verformbare Zunge (12) zum Behälter (10) hin gebogen ist, wenn sich der bewegliche Spießextraktor (6) in der unteren Position (P_{B}) befindet, und in die entgegengesetzte Richtung gebogen ist, wenn sich der bewegliche Spießextraktor (6) in der oberen Position (P_{H}) befindet, wobei ein Spieß in der oberen Position (P_{H}) des beweglichen Spießextraktors (6) die Durchgangsöffnung (120) durchtritt.

## Claims

1. Device (1) for manufacturing at least one skewer comprising a frame (2) and a mobile carriage (3) mounted to slide on the frame (2) between a front position (P_{AV}) and a rear position (P_{AR}), and vice versa, said mobile carriage (3) comprising a lower tray (31) cooperating with an upper tray (32), forming a cover, the upper tray (32) being mounted to move between an open position (Pₒ) and a closed or folded position (P_{F}), the lower and upper trays (31, 32) having recesses for receiving foodstuffs forming at least one row of aligned cavities when the upper tray (32) is folded onto the lower tray (31) and at least one orifice (34) for passing a spike opening into the axis of said at least one row of aligned cavities, the skewering of said at least one spike in the foodstuffs housed in said at least one row of aligned cavities carried out by moving the mobile carriage (3) from the rear position (P_{AR}) to the front position (P_{AV}), said device comprising at least one spike (P) reservoir (10) and a mobile spike extractor (6) configured to be engaged inside the reservoir so as to selectively take at least one spike from said at least one reservoir (10) and extract said at least one spike from said reservoir to position it facing said at least one orifice (34) when the mobile carriage (3) is in the rear position (P_{AR}),
and further comprising synchronisation means configured to synchronise the movement of said mobile spike extractor (6) with the movement of said mobile carriage (3) comprising the lower and upper trays (31, 32).

2. Device (1) for manufacturing at least one skewer according to claim 1, **characterised in that** said mobile spike extractor (6) is slidably mounted on the frame (2) between a low position (P_{B}) and a high position (P_{H}), and vice versa, the extraction and the positioning of the spikes (P) facing said at least one orifice (34) being carried out by moving said mobile spike extractor (6) from the low position (P_{B}) to the high position (P_{H}),
and **in that** said synchronisation means are configured to synchronise:
- the raising of said mobile spike extractor (6) from the low position (P_{B}) to the high position (P_{H}) with the movement of said mobile carriage (3) from the front position (P_{AV}) to the rear position (P_{AR}), corresponding to a backward movement of the mobile carriage (3), and
- the lowering of said mobile spike extractor (6) from the high position (P_{H}) to the low position (P_{B}) with the movement of said mobile carriage (3) from the rear position (P_{AR}) to the front position (P_{AV}) , corresponding to a forward movement of said mobile carriage (3).

3. Device (1) for manufacturing at least one skewer according to claim 2, **characterised in that** said synchronisation means comprise at least one synchronisation lever (7) pivotally mounted on said frame (2) and having:
- a first end (71) connected to said mobile spike extractor (6), and
- a second end (72), supporting a second roller (8) disposed inside a synchronisation track (9) formed on said mobile carriage (3), said synchronisation track (9) having a first end (91), associated with said low position (P_{B}) of said mobile spike extractor (6), and a second end (92), associated with said high position (P_{H}) of said mobile spike extractor (6).

4. Device (1) for manufacturing at least one skewer according to claim 3, **characterised in that** the synchronisation lever (7) has at its first end (71) an oblong aperture (710) cooperating with a first roller (62) carried by said mobile spike extractor (6) so that the pivoting of the synchronisation lever (7) causes the movement of said first roller (62) and the movement of the mobile spike extractor (6) between the high (P_{H}) and low (P_{B}) positions, and vice versa.

5. Device (1) for manufacturing at least one skewer according to claim 4, **characterised in that** said mobile spike extractor (6) comprises a crosspiece (60) carrying said first roller (62), said frame (2) and said crosspiece (60) carrying sliding means allowing the vertical movement of the mobile spike extractor (6) between the high (P_{H}) and low (P_{B}) positions, and vice versa.

6. Device (1) for manufacturing at least one skewer according to any one of claims 3 to 5, **characterised in that** said synchronisation track (9) comprises first and second paths (93, 94) extending between said first and second ends (91, 92) of said synchronisation track (9), said first path (93) being configured to be taken by said second roller (8) when said mobile carriage (3) moves back, said second path (94) being configured to be taken by said second roller (8) when said mobile carriage (3) moves forward.

7. Device (1) for manufacturing at least one skewer according to claim 6, **characterised in that** it comprises at least one one-way shutter (11) allowing the movement of said second roller (8) inside the first path (93) when said mobile carriage (3) moves back and preventing said second roller (8) from moving inside the first path (93) when said mobile carriage (3) moves forward to guide the second roller (8) in the second path (94).

8. Device (1) for manufacturing at least one skewer according to any one of claims 2 to 7, **characterised in that** said mobile spike extractor (6) further comprises at least one spike extraction blade (61) having on its upper face (610) a groove (611) for receiving and holding a spike from the reservoir (10) .

9. Device (1) for manufacturing at least one skewer according to claim 8, **characterised in that** said at least one spike extraction blade (61) is disposed inside a slot (102) formed in the bottom of the spike reservoir (10) when said mobile spike extractor (6) is in the low position (P_{B}), said at least one extraction blade (61) having a lower portion (64) disposed inside the slot (102) when said mobile spike extractor (6) is in the high position (P_{H}).

10. Device (1) for manufacturing at least one skewer according to one of claims 8 or 9, **characterised in that** said frame (2) comprises at least one stop (4) for positioning a spike against which the spike, disposed in the groove (611) for receiving and holding said at least one extraction blade (61) in the high position (P_{H}) of said mobile spike extractor (6), bears at the start of skewering the spike in the foodstuffs housed in said at least one row of aligned cavities.

11. Device (1) for manufacturing at least one skewer according to one of claims 8 to 10, **characterised in that** it comprises at least one deformable tab (12) capable of holding the spike in the groove (611) for receiving and holding said at least one extraction blade (61) in the high position (P_{H}) of said mobile spike extractor (6).

12. Device (1) for manufacturing at least one skewer according to claims 10 and 11, **characterised in that** said at least one deformable tab (12) is positioned on said frame (2) below said at least one positioning stop (4), and **in that** said deformable tab (12) is in the shape of a loop having an opening (120) for the passage of a spike carried by an extraction blade (61) of said mobile spike extractor (6), said deformable tab (12) being bent towards the reservoir (10) when said mobile spike extractor (6) is in the low position (P_{B}) and bent in the opposite direction when said mobile spike extractor (6) is in the high position (P_{H}), a spike passing through the passage opening (120) in said high position (P_{H}) of said mobile spike extractor (6).
